# EUROPEAN PATENT APPLICATION

(11) **EP 3 514 850 A1**
(43) Date of publication of application: **24.07.2019**
(21) Application number: 16916179.1
(22) Date of filing: 13.09.2016
(51) Int. Cl.: H01M 2/10, H01M 2/12, H01M 10/48, H01M 10/52, H01M 10/613, H01M 10/625, H01M 10/647, H01M 10/6556, H01M 10/6563, H01M 10/6568, H01M 10/658

(54) **STORAGE BATTERY DEVICE AND VEHICLE**

(71) Applicant: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: KONDO Atsumi, Tokyo 105-8001 (JP); KANAYAMA Yohsuke, Tokyo 105-8001 (JP); HAGIWARA Keizo, Tokyo 105-8001 (JP); KUROKAWA Kenya, Tokyo 105-8001 (JP); KAMIJO Mototsugu, Tokyo 105-8001 (JP); YOSHINARI Hiroaki, Tokyo 105-8001 (JP); SEKINO Masahiro, Tokyo 105-8001 (JP); KURODA Kazuto, Tokyo 105-8001 (JP)
(74) Representative: AWA Sweden AB
(86) International application number: PCT/JP2016/076907
(87) International publication number: WO 2018/051393

(57) **Abstract**

A storage battery device according to an embodiment includes a housing that is provided an opening which is covered by a predetermined covering means and a storage battery unit that is accommodated in the housing. The covering means is opened with an increase of an internal pressure of the housing.

## Description

### FIELD

An embodiment of the present invention relates to a storage battery device and a vehicle.

### BACKGROUND

In the related art, a storage battery device that repeatedly performs charging and discharging is provided with a circuit breaker that disconnects a storage battery and a main circuit in preparation for occurrence of over-discharge or overcharge.

A storage battery device is used, for example, as a driving power source of a vehicle such as an electric locomotive or a hybrid locomotive. When an unexpected impact such as a vehicle accident is applied to a vehicular storage battery device, there is concern about an increase in internal pressure or temperature. Due to various changes of the external environment, dew condensation may rarely occur in a vehicular storage battery device and there is concern about an influence of this dew condensation on safety. That is, a higher level of safety design is required for a vehicular storage battery device.

### PRIOR ART DOCUMENTS

### PATENT DOCUMENTS

[Patent Document 1] Japanese Unexamined Patent Application, First Publication No. 2016-067072

### SUMMARY

### PROBLEMS TO BE SOLVED BY THE INVENTION

An objective of the invention is to provide a storage battery device that can achieve improvement in safety.

### MEANS FOR SOLVING THE PROBLEMS

A storage battery device according to an embodiment includes a housing and a storage battery unit. The housing is provided with an opening. The opening is covered by a predetermined covering means. The storage battery unit is accommodated in the housing. The covering means is opened with an increase of an internal pressure of the housing.

### BRIEF DESCRIPTION OF THE DRAWINGS

FIG. 1 is a side view of a vehicle according to a first embodiment.
FIG. 2 is a plan view of the vehicle according to the first embodiment.
FIG. 3 is a view of the inside of the vehicle when seen from an arrow III in FIG. 2.
FIG. 4 is a perspective view of a storage battery device according to the first embodiment.
FIG. 5 is an exploded perspective view of a battery pack according to the first embodiment.
FIG. 6 is a schematic sectional view of a housing according to the first embodiment.
FIG. 7 is a schematic diagram illustrating an internal structure of the housing according to the first embodiment.
FIG. 8 is a plan view of shelf plates and battery packs according to the first embodiment.
FIG. 9 is a front view of shelf plates and battery packs according to the first embodiment.
FIG. 10 is a sectional view taken along line X-X in FIG. 8.
FIG. 11 is a sectional view of a first front cover according to a modified example of the first embodiment.
FIG. 12 is a plan view of a shelf plate according to the first embodiment.
FIG. 13 is a block diagram illustrating a circuit configuration of a storage battery device and a main circuit unit according to the first embodiment.
FIG. 14 is a graph illustrating a relationship between a temperature and a time of a self-heating unit cell.
FIG. 15 is a schematic diagram of a cooling system of a storage battery device according to a second embodiment.
FIG. 16 is a plan view illustrating shelf plates and inner passages according to the second embodiment.
FIG. 17 is a plan view illustrating an area in which the temperature of a shelf plate is likely to increase according to the second embodiment.
FIG. 18 is a plan view of shelf plates according to Modified Example 1 of the second embodiment.
FIG. 19 is a plan view of shelf plates and battery packs according to Modified Example 2 of the second embodiment.
FIG. 20 is a schematic diagram of a cooling system according to Modified Example 3 of the second embodiment.
FIG. 21 is a schematic diagram illustrating a circulating flow passage according to Modified Example 4 of the second embodiment.
FIG. 22 is a plan view of shelf plates, battery packs, and a cooling plate according to a third embodiment.
FIG. 23 is a front view of shelf plates, battery packs, and a cooling plate according to the third embodiment.
FIG. 24 is an enlarged view of an area XXIII in FIG. 23.
FIG. 25 is an enlarged view illustrating a recessed groove according to a modified example of the third embodiment.
FIG. 26 is an enlarged view illustrating a recessed groove according to a modified example of the third embodiment.
FIG. 27 is an enlarged view illustrating a recessed groove according to a modified example of the third embodiment.

### DETAILED DESCRIPTION

Hereinafter, a storage battery device and a vehicle according to embodiments will be described with reference to the accompanying drawings. In the drawings, an X-Y-Z coordinate system is illustrated. In the following description, directions will be described on the basis of the coordinate system.

### (First embodiment)

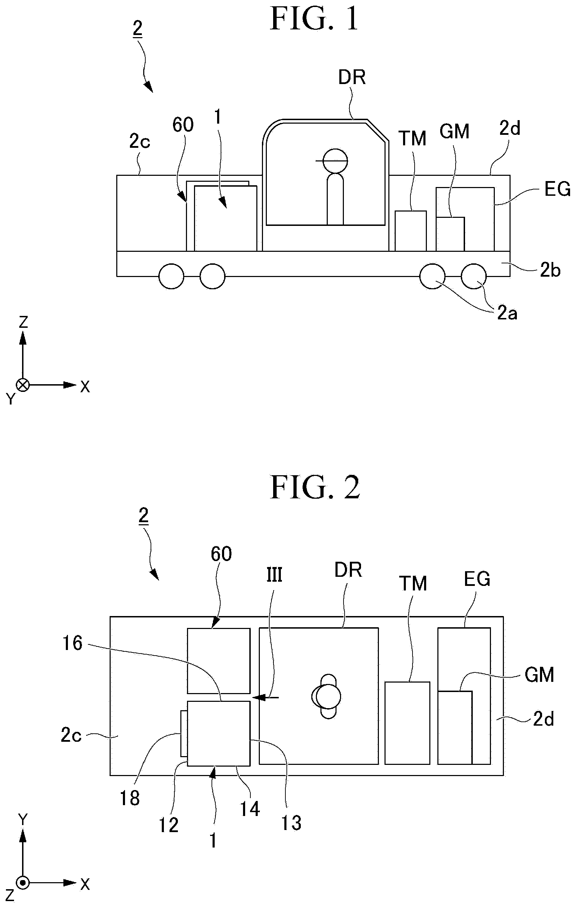

FIG. 1 is a side view of a vehicle (a railway vehicle) 2 including a storage battery device 1 according to a first embodiment. FIG. 2 is a plan view of the vehicle 2 including the storage battery device 1 according to the first embodiment. In FIGS. 1 and 2, a moving direction of the vehicle 2 is a leftward direction in the drawings (-X direction).

As illustrated in FIG. 1, the vehicle 2 includes wheels 2a, a vehicle bogie 2b that supports the wheels 2a, a storage battery device 1, a main circuit unit (a vehicular main circuit unit) 60, a motor TM, an engine EG, a generator GM, and a driving room DR. The vehicle 2 runs on rails (not illustrated) when the motor TM drives the wheels 2a.

The storage battery device 1 and the main circuit unit 60 are accommodated in a front storage room 2c in front of the driving room DR in the moving direction. On the other hand, the motor TM, the engine EG, and the generator GM are accommodated in a rear storage room 2d in the rear of the driving room DR in the moving direction.

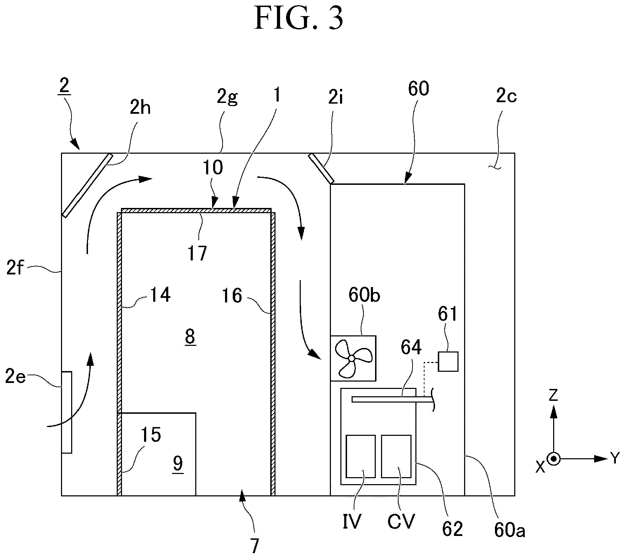

FIG. 3 is a view when seen from an arrow III in FIG. 2 and illustrates the inside of the front storage room 2c of the vehicle 2.

A ventilation hole 2e that communicates with the outside of the vehicle 2 is provided in the lower part of a side wall 2f of the front storage room 2c. The storage battery device 1 and the main circuit unit 60 are arranged in a vehicle width direction. The storage battery device 1 is located on the side wall 2f side on which the ventilation hole 2e is provided in the front storage room 2c.

A gap is provided between a ceiling 2g of the front storage room 2c and the storage battery device 1 and between the ceiling 2g and the main circuit unit 60. A first rectification plate 2h having a flat panel shape is fixed to the corner between the ceiling 2g and the side wall 2f in which the ventilation hole 2e is provided. A second rectification plate 2i having a flat panel shape is fixed to an edge portion of the main circuit unit 60 of the storage battery device 1 side and to the ceiling 2g. The first rectification plate 2h and the second rectification plate 2i are inclined downward to the outside in the vehicle width direction.

The main circuit unit 60 includes a storage case 60a, and a power unit (a power conversion device) 62, a fan (a cooling fan) 60b, a third temperature sensor 64, and a main circuit managing unit 61 in the storage case 60a. The power unit 62 includes an inverter IV and a converter CV. The third temperature sensor 64 is disposed in the space in which the main circuit unit 60 is accommodated. The main circuit managing unit 61 is communicably connected to the third temperature sensor 64. The main circuit managing unit 61 transmits a signal for issuing a warning when a temperature detected by the third temperature sensor 64 is higher than a predetermined temperature (a third temperature T3). The fan 60b blows air from the outside of the storage case 60a toward the power unit 62 to cool the power unit 62. That is, the fan 60b blows air having passed around the storage battery device 1 to the main circuit unit 60.

Outside air introduced from the ventilation hole 2e flows upward on the side of the storage battery device 1. The outside air passes between the storage battery device 1 and the ceiling 2g, further flows downward on the side of the storage battery device 1, and is suctioned into the fan 60b of the main circuit unit 60. The first rectification plate 2h and the second rectification plate 2i smooth the flow of outside air flowing into the front storage room 2c. The outside air cools the storage battery device 1 when passing around the storage battery device 1.

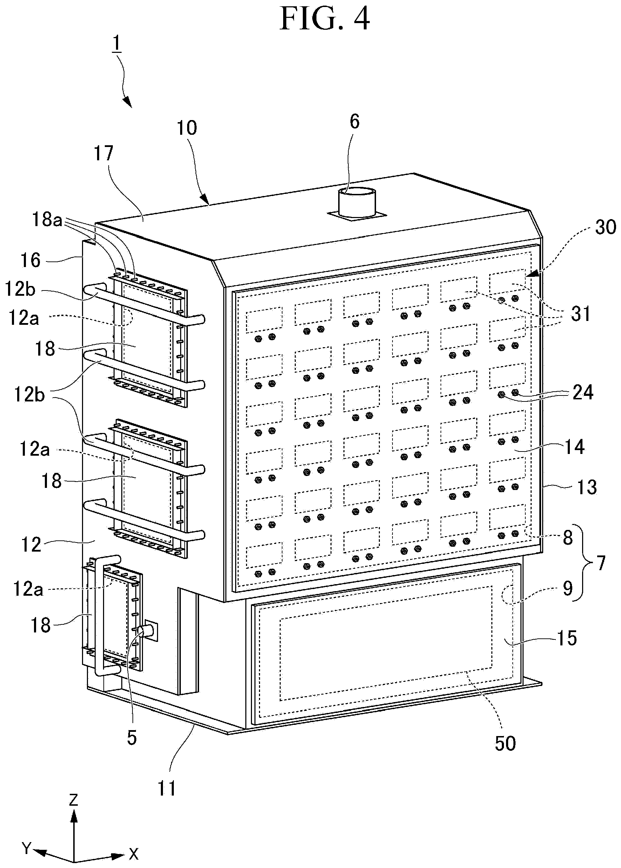

FIG. 4 is a perspective view illustrating the storage battery device 1 according to the first embodiment.

In the following description of the storage battery device 1, the -Y direction in the drawings is defined as a front side, the +Y direction is defined as a rear side, the +Z direction is defined as an upper side, the -Z direction is defined as a lower side, and the X-axis direction is defined as a width direction (or a lateral direction). The front-rear direction defined herein does not match a front-rear direction of the vehicle.

The storage battery device 1 includes a housing 10, a plurality of storage battery units 30, and a storage battery managing unit 50. An internal space 7 including a storage battery chamber 8 and a management chamber 9 which are partitioned from each other is provided in the housing 10. The storage battery unit 30 is accommodated in the storage battery chamber 8. The storage battery managing unit 50 is accommodated in the management chamber 9.

The configuration of each of the storage battery unit 30 will be described below.

The storage battery unit 30 includes a plurality of battery packs 31. The plurality of battery packs 31 are arranged in the height direction, the width direction, and the depth direction in the storage battery chamber 8 of the housing 10.

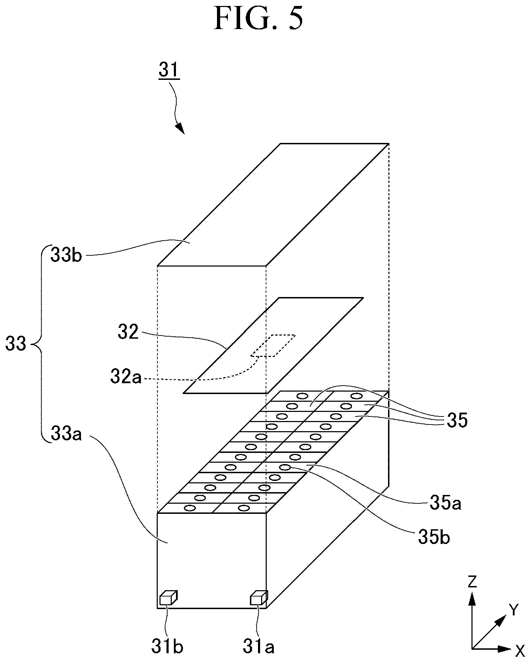

FIG. 5 is an exploded perspective view of a battery pack 31.

Each battery pack 31 includes a plurality of unit cells 35 that are connected to each other, a cell monitoring unit (CMU) 32, and a case 33.

The case 33 accommodates the plurality of unit cells 35 and the cell monitoring unit 32. The case 33 includes a lower case 33a having an opening in one direction and a lid 33b that covers the opening. The unit cells 35 are arranged and accommodated in the case 33. The cell monitoring unit 32 is placed between the arranged unit cells 35 and the lid 33b. A positive electrode terminal 31a and a negative electrode terminal 31b are provided on a side surface of the lower case 33a. The positive electrode terminal 31a is connected to a positive electrode having the highest potential of one of the unit cells 35 connected to each other, and the negative electrode terminal 31b is connected to a negative electrode having the lowest potential of one of the unit cells 35 connected to each other.

Each unit cell 35 is a non-aqueous electrolyte secondary battery such as a lithium-ion battery. Each unit cell 35 includes an outer container 35a having a substantially flat rectangular parallelepiped shape and an electrode (not illustrated) that is accommodated in the outer container along with an electrolyte. A safety valve 35b is provided in the outer container 35a. The safety valve 35b is opened when the electrolyte boils and an internal pressure of the outer container 35a increases.

The cell monitoring unit 32 monitors operating states of a plurality of battery packs 31. The cell monitoring unit 32 includes a first temperature sensor 32a. The first temperature sensor 32a monitors temperatures of the unit cells 35. A voltage sensor (not illustrated) that monitors a voltage of each unit cell 35 may be provided in the cell monitoring unit 32.

The configuration of the housing 10 will be described below.

As illustrated in FIG. 4, the housing 10 includes a bottom plate 11, a first side wall 12, a second side wall 13, a first front cover (a cover) 14, a second front cover 15, a rear cover 16, a top plate 17, and three lids (covering means) 18. The housing 10 forms an internal space 7 (the storage battery chamber 8 and the management chamber 9) which is surrounded by the bottom plate 11, the first side wall 12, the second side wall 13, the first front cover (the cover) 14, the second front cover 15, the rear cover 16, and the top plate 17.

The bottom plate 11 has a rectangular shape in a plan view and is placed on the bottom surface of the housing 10. The first side wall 12 and the second side wall 13 are placed on the short sides of the bottom plate 11 and laterally cover the internal space 7. The second front cover 15 is placed on one long side of the bottom plate 11. The first front cover 14 is placed above the second front cover 15. The rear cover 16 is placed on the other long side of the bottom plate 11. The top plate 17 covers the internal space 7 from above.

The first front cover 14 and the second front cover 15 are both placed on a front maintenance side of the storage battery device 1. A maintenance operator detaches the first front cover 14 and the second front cover 15 and accesses the internal space 7 of the housing 10. The first front cover 14 covers a front opening of the storage battery chamber 8, and the second front cover 15 covers a front opening of the management chamber 9.

Three openings 12a are provided in the first side wall 12. Each opening 12a is covered with a lid 18. The lid 18 has a plate shape. The lid 18 is fixed to the first side wall 12 by a resin bolt (a fixing portion) 18a. When an internal pressure of the housing 10 increases, the resin bolt 18a is destroyed to open the opening 12a. As illustrated in FIG. 2, the lid 18 is provided on a surface facing the side opposite to the driving room DR in a state in which the storage battery device 1 is mounted in the vehicle 2.

The first side wall 12 includes a plurality of guard members (movement limiting portions) 12b that are provided on the outer surface of the first side wall 12. The guard member 12b extends outside the lid 18. A gap is provided between the lid 18 and the guard member 12b. The guard member 12b limits the lid 18 from moving outwardly.

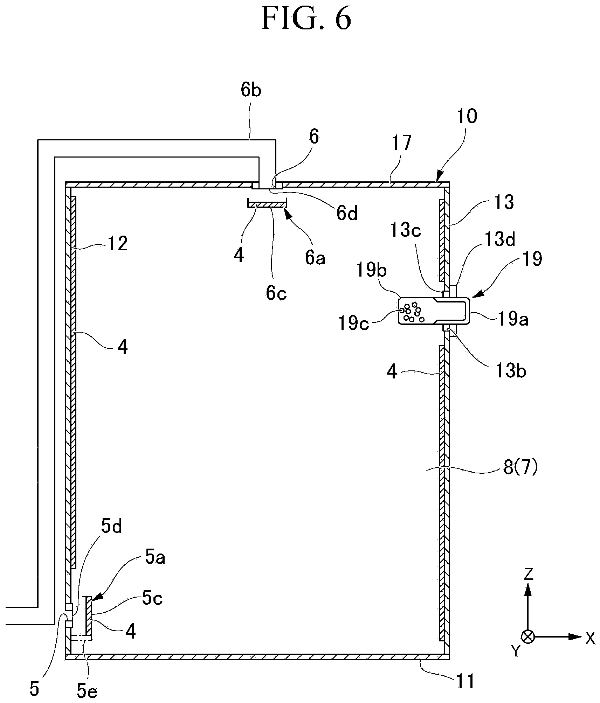

FIG. 6 is a schematic sectional view illustrating a ventilation structure of the housing 10.

A first ventilation hole 5 is provided in the first side wall 12. The first ventilation hole 5 is disposed near the bottom portion of the surface of the first side wall 12. A second ventilation hole 6 is provided at substantially the center of the top plate 17 in a plan view. The first ventilation hole 5 and the second ventilation hole 6 enable the internal space 7 of the housing 10 to communicate with the outside. The first ventilation hole 5 and the second ventilation hole 6 suppress an increase in internal pressure of the housing 10.

The openings of the first ventilation hole 5 and the second ventilation hole 6 are covered by filters 5d. The filter 5d suppresses intrusion of dust into the internal space 7 from the outside. A duct 6b is connected to the outside of the second ventilation hole 6. The duct 6b extends along the top plate 17 and the first side wall 12 of the housing 10 and opens near the first ventilation hole 5.

Water receiving portions 5a and 6a that receive dew condensation water are provided inside the first ventilation hole 5 and the second ventilation hole 6, respectively. The water receiving portion 5a includes a receiving surface 5c that faces the first ventilation hole 5, and the water receiving portion 6a includes a receiving surface 6c that faces the second ventilation hole 6. A dew condensation suppressing material 4 is placed on the receiving surfaces 5c and 6c. The dew condensation suppressing material 4 includes at least one of a moisture absorbing material and a heat insulating material. That is, at least one of a moisture absorbing material and a heat insulating material is provided in the water receiving portions 5a and 6b. When the dew condensation suppressing material 4 is a moisture absorbing material, the moisture absorbing material removes moisture from outside air flowing from the first ventilation hole 5 and the second ventilation hole 6 to suppress occurrence of dew condensation. When the dew condensation suppressing material 4 is a heat insulating material, the heat insulating material curbs cooling of the water receiving portions 5a and 6a due to the outside air passing through the first ventilation hole 5 and the second ventilation hole 6 and suppresses occurrence of dew condensation in the water receiving portions 5a and 6a.

In this way, in the housing 10 in this embodiment, the ventilation holes 5 and 6 that cause the inside and the outside to communicate with each other are provided as dew condensation suppressing means (a first dew condensation suppressing means) and the water receiving portions 5a and 6a that receive dew condensation water are provided at the positions corresponding to the ventilation holes 5 and 6 inside the housing 10.

In this embodiment, the receiving surface 5c of the water receiving portion 5a facing the first ventilation hole 5 is disposed with a gap from the first side wall 12. Accordingly, the receiving surface 5c allows condensed dew to fall onto the bottom plate 11. Accordingly, by providing a drainer in the bottom plate 11, the dew condensation water can be discharged to the outside.

The water receiving portion 5a may include a sub receiving surface 5e as indicated by a two-dot chain line in FIG. 6. The sub receiving surface 5e is placed between the bottom end of the receiving surface 5c and the first side wall 12. The sub receiving surface 5e is placed below the first ventilation hole 5 inside the housing 10. The sub receiving surface 5e can collect dew condensed on the receiving surface 5c. A moisture absorbing material may be provided in the sub receiving surface 5e.

As illustrated in FIG. 6, the inner surfaces of the first side wall 12 and the second side wall 13 are covered by a dew condensation suppressing material 4. That is, at least part of the inner surface of the housing 10 is covered by the dew condensation suppressing material 4. When the dew condensation suppressing material 4 is a moisture absorbing material, the dew condensation suppressing material 4 which is the moisture absorbing material absorbs moisture in the housing 10 to suppress dew condensation in the housing. When the dew condensation suppressing material 4 is a heat insulating material, the heat insulating material suppresses occurrence of dew condensation on the inner surface of the housing 10 due to a temperature difference between inside area and outside air.

In this way, the housing 10 in this embodiment includes dew condensation suppressing means (a third dew condensation suppressing means) in which at least part of an inner wall surface thereof is covered by the dew condensation suppressing material 4 (at least one of a moisture absorbing material and a heat insulating material).

A hole 13b is provided in the second side wall 13. A replaceable container 19 that stores a moisture absorbing material 19c is attached to the hole 13b. A packing 13c which is held by a holding member 13d is provided in the inner circumference of the hole 13b. Accordingly, there is no gap between the replaceable container 19 and the hole 13b.

The replaceable container 19 includes a first tubular portion 19a having a bottomed box shape and a second tubular portion 19b having a bottomed box shape. The replaceable container 19 has a structure in which openings of the first tubular portion 19a and the second tubular portion 19b are superimposed. Accordingly, the replaceable container 19 has an accommodation space therein. The first tubular portion 19a is placed outside the housing 10 in a state in which the replaceable container 19 is attached to the hole 13b. The first tubular portion 19a is formed of an air-tight member. On the other hand, the second tubular portion 19b is placed inside the housing 10 in a state in which the replaceable container 19 is attached to the hole 13b. The second tubular portion 19b is formed of a member with a network structure. Accordingly, the inside of the replaceable container 19 is sealed from the outside of the housing 10 and communicates with the inside of the housing 10. The moisture absorbing material 19c accommodated in the replaceable container 19 is exposed to the internal space 7 and dehumidifies the internal space 7. Accordingly, occurrence of dew condensation in the internal space 7 is curbed. The replaceable container 19 can be detached from the housing 10. Accordingly, the replaceable container 19 can enable constant dehumidification in the housing 10 by replacing the moisture absorbing material 19c therein.

In this way, a replaceable container is attached to the housing 10 as the dew condensation suppressing means (a second dew condensation suppressing means) in this embodiment.

The internal structure of the housing 10 will be described below.

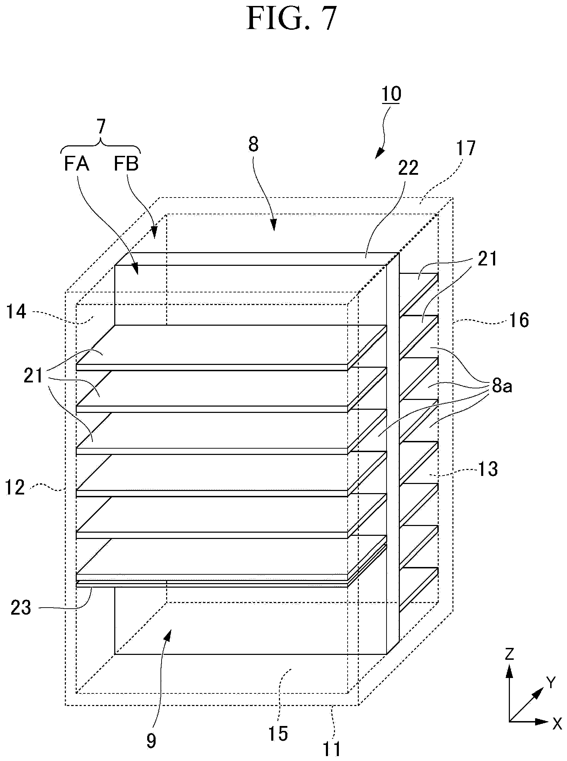

FIG. 7 is a schematic diagram illustrating the internal structure of the housing 10. In FIG. 6, the external structure of the housing 10 is illustrated by a dotted line. The external structure of the housing 10 includes the bottom plate 11, the first side wall 12, the second side wall 13, the first front cover 14, the second front cover 15, the rear cover 16, and the top plate 17 which are illustrated in FIG. 4.

The housing 10 includes a framework (not illustrated), a plurality of shelf plates (a second partition wall) 21, a central partition wall (a first partition wall and a second partition wall) 22, and an arc barrier wall (a first partition wall) 23 therein. The plurality of shelf plates 21, the central partition wall 22, and the arc barrier wall 23 are fixed to the framework having a frame structure.

The central partition wall 22 extends in the length direction (that is, the width direction) of the bottom plate 11 and the vertical direction at substantially the center in the short-side direction of the bottom plate 11. The central partition wall 22 partitions the internal space 7 of the housing 10 into front and rear sides to form a front compartment FA and a rear compartment FB.

The arc barrier wall 23 is placed in the front compartment FA. The arc barrier wall 23 is disposed parallel to the bottom plate 11. The arc barrier wall 23 is fixed to the vicinity of the bottom of the central partition wall 22. The arc barrier wall 23 partitions the front compartment FA into upper and lower sides to form the management chamber 9 on the lower side. The storage battery chamber 8 is formed in a region other than the management chamber 9 in the internal space 7 of the housing 10. That is, the central partition wall 22 and the arc barrier wall 23 serve as partition walls (a first partition wall) that partition the internal space 7 of the housing 10 into the management chamber 9 and the storage battery chamber 8.

The upper part of the management chamber 9 is covered by the arc barrier wall 23 and the rear part thereof is covered by the central partition wall 22. Both sides of the management chamber 9 are covered by the first side wall 12 and the second side wall 13, and the lower part thereof is covered by the bottom plate 11. The front part of the management chamber 9 is covered by the second front cover 15.

In the management chamber 9, air-tightness is secured with respect to the storage battery chamber 8. Accordingly, an arc generated in the storage battery chamber 8 and fumes generated due to the arc do not reach the management chamber 9.

"Air-tightness" in this specification refers to a state in which entrance and exit of gas to and from a specific space is satisfactorily suppressed.

The plurality of shelf plates 21 are disposed to be parallel to the bottom plate 11. Each shelf plate 21 has a rectangular shape in a plan view and has the width direction of the housing 10 as a length direction thereof. The plurality of shelf plates 21 are arranged in the vertical direction in the front compartment FA and the rear compartment FB in the housing 10 which are partitioned by the central partition wall 22. Since the management chamber 9 is provided in the lower part of the front compartment FA, the number of shelf plates 21 provided in the front compartment FA is smaller than the number of shelf plates 21 provided in the rear compartment FB. One shelf plate 21 in the front compartment FA and one shelf plate 21 in the rear compartment FB are provided in the same height.

The shelf plates 21 partition the storage battery chamber 8 into a plurality of sub-chambers 8a. It is preferable that the sub-chambers 8a have air-tightness with respect to each other. Accordingly, it is possible to prevent gas generated in one sub-chamber 8a from intruding into another sub-chamber 8a.

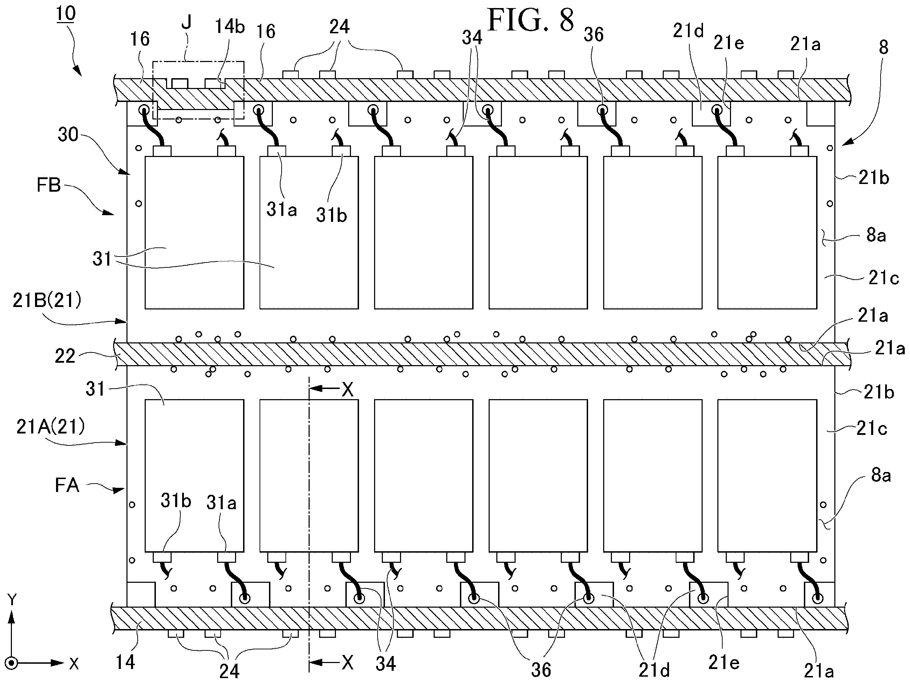

FIG. 8 is a plan view schematically illustrating a pair of sub-chambers 8a with the central partition wall 22 interposed therebetween and battery packs 31 which are accommodated in the sub-chambers 8a.

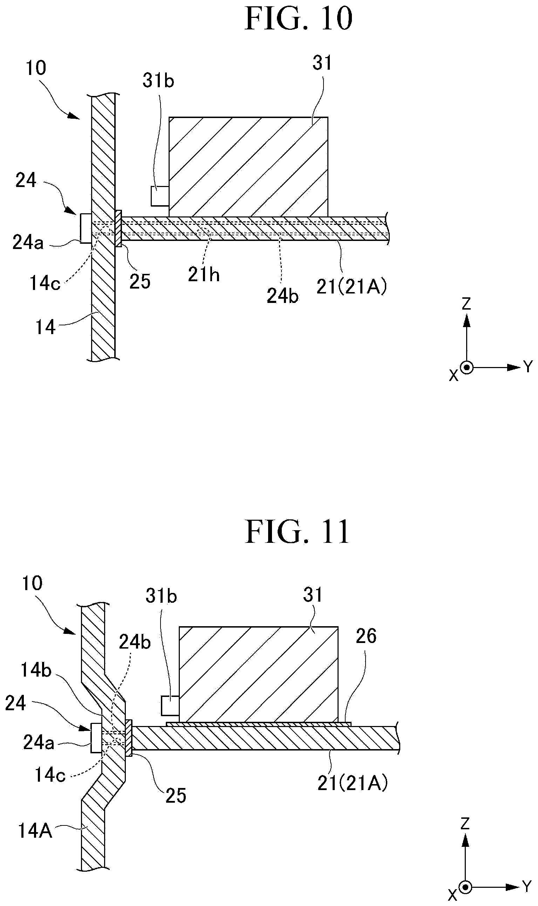

The shelf plates 21 are arranged on the front and rear sides of the central partition wall 22 in the storage battery chamber 8. A plurality of battery packs 31 arranged in the right and left direction are mounted on each shelf plate 21. The battery packs 31 are fixed to the shelf plate 21 in a state in which they are in contact with the shelf plate 21. As illustrated in FIG. 11, a heat transfer member 26 may be interposed between the battery packs 31 and the shelf plate 21. That is, the battery packs 31 may be in contact with the shelf plate 21 with the heat transfer member 26 interposed therebetween. For example, a flexible heat transfer sheet can be used as the heat transfer member 26.

As illustrated in FIG. 8, each shelf plate 21 includes a pair of long-side edges (a first end face and a third end face) 21a constituting the long sides of a rectangular shape and a pair of short-side edges (a second end face) 21b which are perpendicular to the long-side edges 21a in a plan view. Here, among the pair of shelf plates 21 which are arranged on the front and rear sides, the shelf plate disposed in the front compartment FA is referred to as a front shelf plate 21A, and the shelf plate disposed in the rear compartment FB is referred to as a rear shelf plate 21B.

One of a pair of long-side edges 21a of the front shelf plate 21A is connected to the first front cover 14, and the other is connected to the central partition wall 22. Similarly, one of a pair of long-side edges 21a of the rear shelf plate 21B is connected to the rear cover 16 and the other is connected to the central partition wall 22. The housing 10 includes bolts (surface pressure applying portions) 24 for fixing the first front cover 14, the front shelf plate 21A, and the central partition wall 22 and fixing the rear cover 16, the rear shelf plate 21B, and the central partition wall 22.

Each of the shelf plates 21 (the front shelf plate 21A and the rear shelf plate 21B) includes a body portion 21c and an insertion plate portion 21d. The body portion 21c includes a recessed portion 21e on one long-side edge 21a side. The insertion plate portion 21d is inserted into a gap between the recessed portion 21e and the first front cover 14.

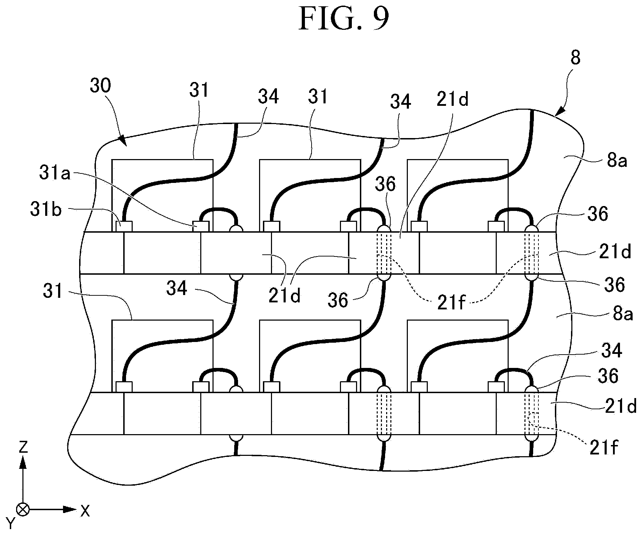

FIG. 9 is a front view schematically illustrating shelf plates 21 and battery packs 31.

A plurality of battery packs 31 of the storage battery unit 30 are accommodated in a plurality of sub-chambers 8a partitioned by the shelf plates 21. The storage battery unit 30 includes wire portions 34 that electrically connect the plurality of battery packs 31 to each other. In the sub-chambers 8a which are vertically partitioned, a positive electrode terminal 31a of one battery pack 31 in the upper sub-chamber 8a is connected to a negative electrode terminal 31b of the battery pack 31 immediately below via the wire portion 34.

As illustrated in FIG. 9, a through-hole 21f is provided in the insertion plate portion 21d. A wire portion 34 is inserted into the through-hole 21f. A wire clamping portion 36 is attached to an opening of the through-hole 21f in the upper and lower surfaces of the insertion plate portion 21d. The wire clamping portion 36 is a so-called cable gland. The wire clamping portion 36 occupies a gap between the wire portion 34 and the inner circumferential surface of the through-hole 21f. The wire clamping portion 36 prevents communication between the sub-chambers 8a via the through-hole 21f and secures air-tightness of each sub-chamber 8a.

FIG. 10 is a sectional view taken along line X-X in FIG. 8 and is a diagram illustrating a connection relationship between the battery packs 31, the front shelf plate 21A, and the first front cover 14. Here, the front shelf plate 21A will be mainly described below, and the connection relationship between the battery packs 31, the rear shelf plate 21B, and the rear cover 16 has the same configuration as will be described below.

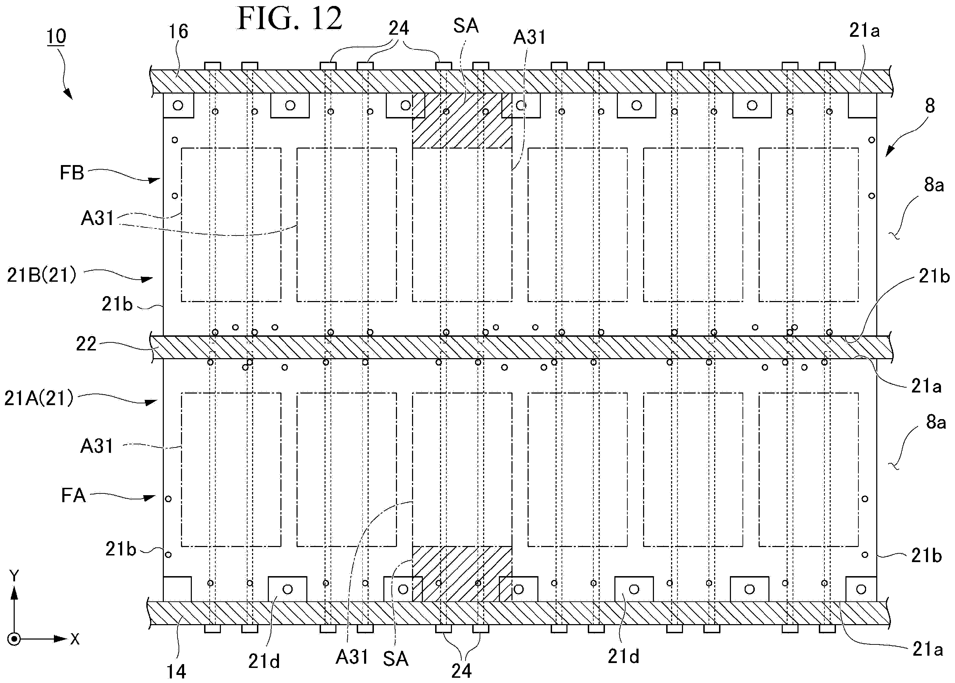

As illustrated in FIG. 10, the first front cover 14 is connected to the shelf plates 21 by the bolts 24. Each bolt 24 includes a head 24a and a shaft portion 24b. The head 24a is placed on the outer surface of the first front cover 14. The shaft portion 24b is inserted into holes 14c and 21h which are formed in the first front cover 14 and the shelf plate 21. A threaded portion formed at the tip of the shaft portion 24b is inserted into a female screw formed in the central partition wall 22 (see FIG. 12).

A heat transfer member 25 is interposed between the first front cover 14 and the shelf plate 21. The heat transfer member 25 is provided to enhance a heat transfer efficiency between the first front cover 14 and the shelf plate 21. For example, a flexible heat transfer sheet can be used as the heat transfer member 25. Since the heat transfer member 25 has flexibility, a contact area between the heat transfer member 25 and the first front cover 14 and the shelf plate 21 can be secured and the heat transfer efficiency can be further enhanced.

The first front cover 14 partitions the storage battery chamber 8 and the outside. That is, one surface of the first front cover 14 is exposed to the outside and the other surface faces the inside. The first front cover 14 is connected to the shelf plates 21. The battery packs 31 are in contact with each shelf plate 21. Accordingly, the first front cover 14 receives heat generated in the battery packs 31 via the shelf plates 21 and radiates the heat to the outside.

The bolt 24 serves as a surface pressure applying portion that applies a surface pressure to a contact surface between the first front cover 14 and the corresponding shelf plate 21. It is known that the heat transfer efficiency on the contact surface increases as the surface pressure applied to the contact surface increases. The heat transfer efficiency is enhanced by applying a surface pressure between the first front cover 14 and the shelf plate 21.

In this embodiment, the bolts 24 are used as the surface pressure applying portion. However, the configuration of the surface pressure applying portion is not limited as long as it presses the first front cover 14 to the front shelf plate 21A.

FIG. 12 is a plan view of the shelf plates 21 in the housing 10 of this embodiment.

As illustrated in FIG. 12, one (a first end face) of a pair of long-side edges 21a of a shelf plate 21 faces the first front cover 14 or the rear cover 16, and the other (a third end face) thereof faces the central partition wall 22. The bolts 24 pass through the first front cover 14 and the inside of the shelf plate 21 and are fixed to the central partition wall 22. In the example illustrated in FIG. 12, the bolt 24 passing through the front shelf plate 21A and the bolt 24 passing through the rear shelf plate 21B are disposed at the same position when seen in the axial direction of the bolt 24. The bolts 24 passing through the front shelf plate 21A and the rear shelf plate 21B may be disposed to shift from each other.

The bolts 24 are placed in shortest paths from a contact surface A31 between the shelf plate 21 and the battery pack 31 to the first front cover 14 when the second partition wall is seen in the in-plane direction. In this embodiment, there are many shortest paths from the contact surface A31 to the first front cover 14. A set of shortest paths from the contact surface A31 to the first front cover 14 is illustrated as a shortest area SA in FIG. 12. The bolt 24 is located in the shortest area SA. The surface pressure between the first front cover 14 and the front shelf plate 21A is the highest around the bolt 24. On the other hand, an amount of heat transferred from the battery pack 31 to the first front cover 14 is the largest in the shortest paths. By disposing the bolt 24 in the shortest paths from the contact surface A31 between the front shelf plate 21A and the battery pack 31 to the second partition wall, a part in which the surface pressure is high and the heat transfer efficiency is high can be disposed in an area with the largest amount of heat transferred.

FIG. 11 is a sectional view illustrating a first front cover 14A according to a modified example of this embodiment. A recessed portion 14b is provided on the surface facing the outside of the first front cover 14A. The depth of the recessed portion 14b is larger than the size in the axial direction of the head 24a of the bolt 24. A hole 14c into which the bolt 24 is inserted is formed in part of the first front cover 14A corresponding to the recessed portion 14b. When the bolt 24 is inserted into the hole 14c from the outside, the head 24a is disposed inside the recessed portion 14b. Accordingly, the head 24a does not protrude from the surface facing the outside of the first front cover 14A and the total size can decrease. The recessed portion 14b increases the surface area of the outer surface of the first front cover 14A and thus enhances heat radiation efficiency from the first front cover 14A to the outside. The same recessed portion 14b as in the first front cover 14A may be employed in the rear cover 16. As indicated by an area J in FIG. 8, the recessed portion 14b is formed to offset to the battery pack 31 side. Accordingly, a gap between the first front cover 14A (or the rear cover 16) and the battery pack 31 decreases.

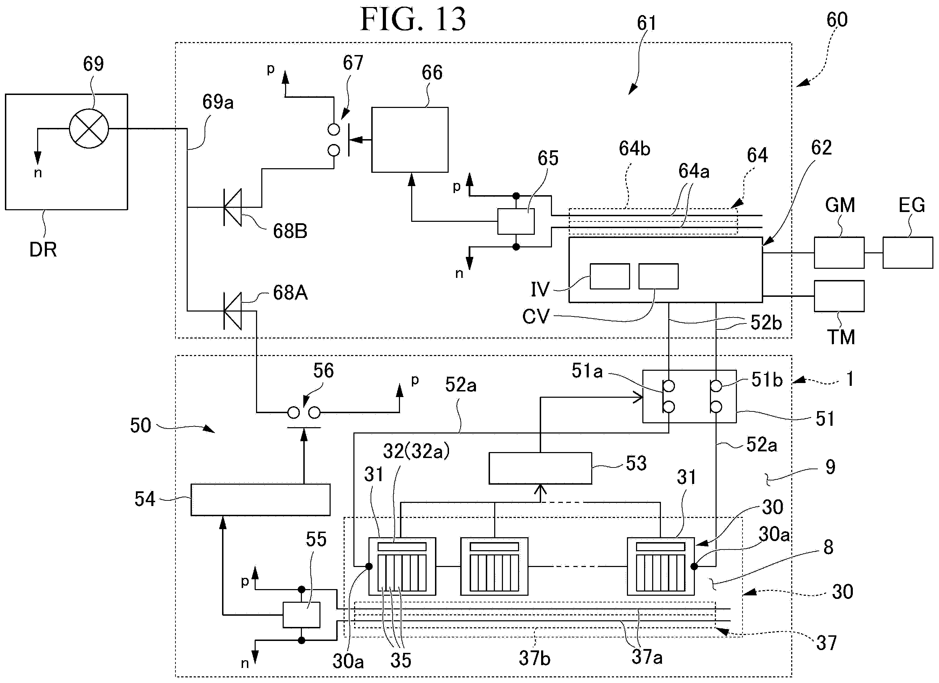

FIG. 13 is a block diagram illustrating a circuit configuration of the storage battery device 1 and the main circuit unit 60 which is provided outside the storage battery device 1.

The circuit configuration of the storage battery device 1 including the storage battery managing unit 50 will be described below.

The circuit of the storage battery device 1 illustrated in FIG. 13 includes circuits of the storage battery unit 30 and the storage battery managing unit 50. The storage battery managing unit 50 manages the operating state of the storage battery unit 30. The storage battery managing unit 50 includes a first determination unit 53, a second determination unit 54, a first voltage sensor 55, a wiring circuit breaker (hereinafter simply referred to as a circuit breaker), and a first switch 56. The storage battery unit 30 includes battery packs 31 which are connected to each other and a second temperature sensor 37. A cell monitoring unit 32 is provided in each battery pack 31. The cell monitoring unit 32 includes a first temperature sensor 32a that monitors the temperature of a unit cell 35. The cell monitoring unit 32 transmits the temperature of the unit cell 35 detected at predetermined detection intervals to the first determination unit 53.

The storage battery unit 30 is connected to the power unit 62 on the main circuit unit 60 side via the circuit breaker 51. A pair of terminals 30a of a positive electrode and a negative electrode of the storage battery unit 30 are connected to contacts 51a and 51b of the circuit breaker 51, respectively, via wires 52a. The contacts 51a and 51b of the circuit breaker 51 are connected to the power unit 62 via wires 52b.

The contacts 51a and 51b of the circuit breaker 51 are normally closed type movable contact. The contacts electrically connect the power unit 62 to the storage battery unit 30 in a normal state. The contacts 51a and 51b are opened by the first determination unit 53. The first determination unit 53 opens the contacts 51a and 51b when the temperature of a unit cell 35 detected by the first temperature sensor 32a is higher than a normal temperature (hereinafter a first temperature T1) of the unit cell 35. When the contacts 51a and 51b are opened, the storage battery unit 30 is electrically cut off. The storage battery unit 30 may be electrically opened or isolated.

The second temperature sensor 37 is placed inside the storage battery chamber 8. That is, the second temperature sensor 37 is disposed in a space in which the storage battery unit 30 is accommodated. The second temperature sensor 37 extends in the arrangement direction of a plurality of battery packs 31. The second temperature sensor 37 includes a pair of wires 37a and coating portions 37b that coat the pair of wires 37a to electrically isolate each other. The coating portion 37b is melted at a second temperature T2 which is higher than the first temperature T1. When the coating portion 37b is melted, the pair of wires 37a are electrically connected. For example, it is preferable that the second temperature T2 be set to a temperature which is slightly lower than a boiling point of the electrolyte of the unit cell 35.

A potential difference is given to the pair of wires 37a of the second temperature sensor 37. The first voltage sensor 55 measures the potential difference between the pair of wires 37a. The first voltage sensor 55 is monitored by the second determination unit 54. When the potential difference measured by the first voltage sensor 55 decreases due to electrical connection between the pair of wires 37a, the second determination unit 54 determines that the temperature of the storage battery chamber 8 is higher than the second temperature T2 and operates the first switch 56. That is, the second temperature sensor 37 detects that the temperature of the storage battery unit 30 is higher than the second temperature T2. The second determination unit 54 transmits a signal for issuing a warning (a signal for operating the first switch 56) on the basis of the result of detection from the second temperature sensor 37.

The first switch 56 is connected to a diode 68A in the main circuit unit 60 and an indicator lamp 70 in the driving room DR via a wire 69a. The wire 69a is connected to a positive electrode and a negative electrode of a control power supply (not illustrated). When the first switch 56 is turned on, a current flows in the wire 69a and the indicator lamp 70 is turned on. That is, the indicator lamp 70 is turned on when the temperature of the storage battery chamber 8 is higher than the second temperature T2.

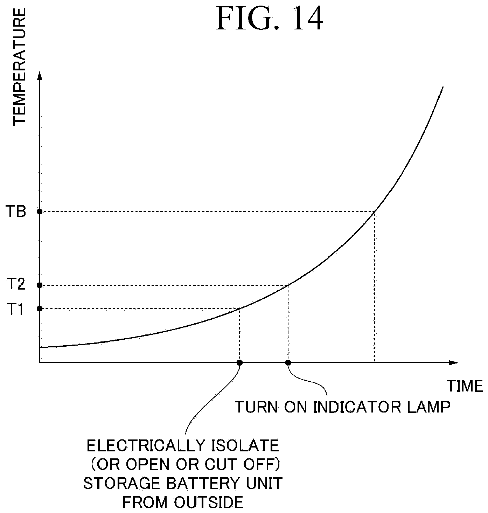

FIG. 14 is a graph illustrating a relationship between the temperature of a unit cell 35 heating itself and the time. In FIG. 14, the temperature TB is a boiling point of an electrolyte in the unit cell 35. As illustrated in FIG. 14, when the unit cell 35 heats itself, the temperature of the unit cell 35 increases in an accelerative manner.

When the temperature of the unit cell 35 reaches the first temperature T1, the storage battery device 1 operates the circuit breaker 51 to electrically cut off the storage battery unit 30 from the outside. The storage battery unit 30 which is electrically cut off from the outside does not perform discharging and charging. Accordingly, it is possible to curb emission of heat from the unit cell 35 due to electric power from the outside. However, when the unit cell 35 heats itself, the temperature of the unit cell 35 further increases. When the temperature of the unit cell 35 further increases and becomes higher than the second temperature T2, the indicator lamp 69 in the driving room DR is turned on. A driver recognizes the likelihood that the unit cell 35 will heat itself by seeing the turning-on of the indicator lamp 69.

The circuit configuration of the main circuit unit 60 will be described below.

As illustrated in FIG. 13, the main circuit unit 60 includes a power unit (a power conversion device) 62 and a main circuit managing unit 61 that manages the operating state of the main circuit unit 60. The main circuit managing unit 61 includes a third temperature sensor 64, a second voltage sensor 65, a third determination unit 66, and a second switch 67. The power unit 62 includes an inverter IV and a converter CV therein. The power unit 62 is connected to the motor TM, the generator GM, and the storage battery unit 30 of the storage battery device 1.

The third temperature sensor 64 is disposed along the power unit 62 in the main circuit unit 60 (see FIG. 3). Similarly to the second temperature sensor 37, the third temperature sensor 64 includes a pair of wires 64a and coating portions 64b that coat the pair of wires 64a to electrically isolate each other. The coating portion 64b is melted at a third temperature T3 which is higher than the second temperature T2. It is preferable that the third temperature T3 be set to a temperature which is higher than an upper-limit temperature at which the power unit 62 can operate normally.

A potential difference is given to the pair of wires 64a of the third temperature sensor 64. The second voltage sensor 65 measures the potential difference between the pair of wires 64a. The second voltage sensor 65 is monitored by the third determination unit 66. When the potential difference measured by the second voltage sensor 65 decreases due to electrical connection between the pair of wires 64a, the third determination unit 66 determines that the temperature of the main circuit unit 60 is higher than the third temperature T3 and operates the second switch 67. That is, the third temperature sensor 64 detects that the temperature of the main circuit unit 60 is higher than the third temperature T3. The third determination unit 66 transmits a signal for issuing a warning (a signal for operating the second switch 67) on the basis of the result of detection from the third temperature sensor 64.

The second switch 67 is connected to a diode 68B and the indicator lamp 70 in the driving room DR via a wire 69a. The wire 69a is connected to a positive electrode and a negative electrode of a control power supply (not illustrated). When the second switch 67 is turned on, a current flows in the wire 69a and the indicator lamp 70 is turned on. That is, the indicator lamp 70 is turned on when the temperature of the main circuit unit 60 is higher than the second temperature T2. The indicator lamp 70 is turned on to warn a driver that the temperature of the main circuit unit 60 increases.

As illustrated in FIG. 4, the housing 10 according to this embodiment, an opening 12a which is covered by a lid 18 is provided in the first side wall 12. The lid 18 is opened by moving outward from the housing 10 due to an increase of the internal pressure. The lid 18 secures air-tightness in the housing 10 in a normal state. The lid 18 opens the opening 12a with an increase of the internal pressure of the housing 10. Accordingly, an excessive increase of the internal pressure of the housing 10 is prevented. When ignitable gas is filled in the housing 10, the inside of the housing 10 is ventilated and the gas concentration can be reduced by opening the opening 12a. That is, it is possible to improve safety of the storage battery device 1.

The housing 10 according to this embodiment includes a resin bolt 18a that fixes the lid 18 to the first side wall 12. The resin bolt 18a is destroyed with an increase of the internal pressure of the housing 10. When the resin bolt 18a is destroyed, fixation of the lid 18 to the first side wall 12 is released. Accordingly, the lid 18 is detached from the first side wall 12 and the opening 12a can be opened.

In this embodiment, the lid 18 is employed as a covering means and the resin bolt 18a is employed as a fixing portion for fixing the lid 18 to the first side wall 12. However, the lid 18 is a predetermined covering means that covers the opening 12a and is not limited in its configuration as long as it is opened with an increase of the internal pressure of the housing 10. For example, the covering means may be a film which is torn when a predetermined pressure is applied thereto. In this case, the film is torn to open the opening 12a with an increase of the internal pressure of the housing 10. The configuration of the fixing portion is not limited as long as it can release fixation of the lid 18 with an increase of the internal pressure of the housing 10.

The housing 10 according to this embodiment includes a guard member 12b that limits the lid 18 from moving outwardly when the lid 18 departs. When the internal pressure of the housing 10 increases, fixation of the lid 18 to the first side wall 12 is released and the lid 18 moves outward at a high speed. Since the guard member 12b limiting the lid 18 from moving outwardly, it is possible to prevent the lid 18 from colliding with another device which is disposed adjacent to the storage battery device 1.

As illustrated in FIG. 2, the lid 18 according to this embodiment is provided on a surface facing the side opposite to the driving room DR in a state in which the storage battery device 1 is mounted in the vehicle 2. Accordingly, it is possible to prevent the lid 18 from colliding with a driver in the driving room DR and to prevent gas discharged from the housing 10 from reaching a driver.

As illustrated in FIG. 7, according to this embodiment, the inside of the housing 10 is air-tightly partitioned into the storage battery chamber 8 in which the storage battery unit 30 is accommodated and the management chamber 9 in which the storage battery managing unit 50 is accommodated. The central partition wall 22 and the arc barrier wall 23 can prevent an arc and fumes generated in the storage battery unit 30 from reaching the storage battery managing unit 50 and suppress problems in the storage battery managing unit 50 due to an arc and fumes. That is, it is possible to provide a storage battery device 1 that can enhance reliability of the storage battery managing unit 50 and improve safety.

The housing 10 according to this embodiment, the storage battery chamber 8 is partitioned into a plurality of sub-chambers 8a in which the battery packs 31 are accommodated. By separately accommodating the battery packs 31 in the plurality of sub-chambers 8a, it is possible to prevent abnormality of one battery pack 31 from affecting other battery packs 31. Accordingly, it is possible to improve safety of the storage battery device 1. By securing air-tightness between the sub-chambers 8a, it is possible to further reduce an influence between the battery packs 31 in different sub-chambers 8a.

As illustrated in FIG. 13, the storage battery device 1 according to this embodiment includes the first temperature sensor 32a and the first determination unit 53 that detects that the temperature of a unit cell 35 is higher than a normal temperature range (equal to or lower than the first temperature T1) and electrically cuts off the storage battery unit 30. The storage battery device 1 prevents overcharge from being performed in a state in which the temperature of the storage battery unit 30 is higher than the first temperature T1 and thus secures safety. The storage battery device 1 may include a plurality of temperature sensors that are connected to the circuit breaker in addition to the first temperature sensor 32a. In this case, redundancy of a break system of the storage battery unit 30 is increased and safety of the storage battery device 1 is further enhanced.

The storage battery device 1 according to this embodiment includes the storage battery managing unit 50 that detects that the temperature of the storage battery unit 30 is higher than the second temperature T2 higher than the first temperature T1 and transmits a signal for issuing a warning. Since the storage battery unit 30 is electrically isolated by the circuit breaker 51 at the first temperature T1, it is estimated that the storage battery unit 30 heats itself when the temperature increases (that is, when the temperature becomes higher than the second temperature T2). By enabling the storage battery managing unit 50, which is provided to be isolated from the storage battery unit 30, to emit a warning signal, it is possible to take rapid measure for self-heating of the storage battery unit 30. As a specific method of issuing a warning, a warning sound may be issued in addition to turning on of the indicator lamp 69 in the driving room DR.

As illustrated in FIG. 10, according to this embodiment, the battery packs 31 are in contact with the shelf plate 21 and the shelf plate 21 is fastened to the first front cover 14 in a surface contact state. Since the first front cover 14 partitions the inside and outside of the housing 10, heat which is generated in the battery pack 31 is radiated to the outside via the shelf plate 21 and the first front cover 14. Accordingly, the battery pack 31 is cooled and prevented from increasing in temperature and safety of the storage battery device 1 is enhanced. Since the storage battery device 1 is disposed to be exposed to a flow passage of air as illustrated in FIG. 3, the housing 10 including the first front cover 14 is cooled by air. Accordingly, a fin for increasing the surface area may be provided on the outer surface of the first front cover 14.

### (Second embodiment)

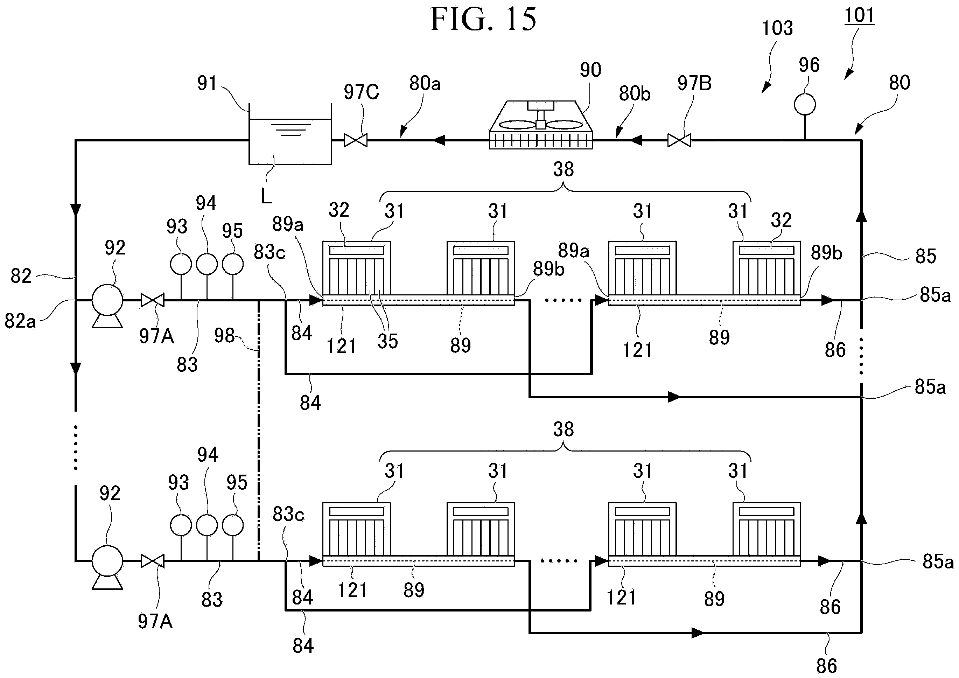

FIG. 15 is a schematic diagram illustrating a cooling system 103 of a storage battery device 101 according to a second embodiment. The schematic structure of the storage battery device 101 according to this embodiment is different from that of the storage battery device 1 according to the first embodiment in a cooling system 103. The same elements as in the above-mentioned embodiment will be referred to by the same reference signs and description thereof will not be repeated.

In this embodiment, a plurality of battery packs 31 are classified into a plurality of battery pack groups 38. Each battery pack group 38 includes a plurality of battery packs 31.

The cooling system 103 is provided in the storage battery device 101. The cooling system 103 includes a refrigerant L, a circulation flow passage 80 through which the refrigerant L passes, a radiator (a heat radiating unit) 90, a reservoir tank 91, a liquid leakage sensor 96, a plurality of pumps 92, a plurality of pressure sensors 93, a plurality of flow sensors 94, a plurality of temperature sensors 95, a plurality of valves 97A, 97B, and 97C. The radiator 90 radiates heat from the refrigerant L. Part of the circulation flow passage 80 passes through the inside of a plurality of shelf plates (the second partition wall) 121 on which battery packs 31 are mounted. The battery packs 31 are in contact with the shelf plates 121.

The circulation flow passage 80 includes an outward passage 80a, a return passage 80b, and a plurality of inner passage 89. An inlet portion 89a and an outlet portion 89b are provided at both ends of the inner passage 89. The inner passage 89 is placed inside the shelf plates 121. That is, the circulation flow passage 80 passes through the inside of the shelf plates 121 along the inner passage 89. One inner passage 89 is provided for each shelf plate 121. The outward passage 80a connects the radiator 90 and the inlet portion 89a of the inner passage 89. The return passage 80b connects the outlet portion 89b of the inner passage 89 and the radiator 90.

The outward passage 80a includes a main outward passage 82, a plurality of first branch outward passages 83, and a plurality of second branch outward passages 84. The first branch outward passages 83 are provided to correspond to the battery pack groups 38. Accordingly, the number of first branch outward passages 83 coincides with the number of battery pack groups 38. The second branch outward passages 84 are provided to correspond to the shelf plates 121. Accordingly, the number of second branch outward passages 84 coincides with the number of shelf plates 121.

The radiator 90 is provided at one end of the main outward passage 82, and a first branching portion 82a is provided at the other end thereof. That is, the main outward passage 82 branches into the plurality of first branch outward passages 83 at the first branching portion 82a.

The valve 97C and the reservoir tank 91 are provided in the main outward passage 82. The valve 97C prevents leakage of the refrigerant L from the circulation flow passage 80 by closing the passage at the time of maintenance. The reservoir tank 91 stores the refrigerant L.

The pump 92, the valve 97A, the pressure sensor 93, the flow sensor 94, and the temperature sensor 95 are provided in each of the plurality of first branch outward passages 83. The pump 92 pumps out the refrigerant L in the first branch outward passage 83. The refrigerant L circulates in the circulation flow passage 80 by pumping by the pump 92. The pressure sensor 93, the flow sensor 94, and the temperature sensor 95 are provided to ascertain the state of the refrigerant L in the circulation flow passage 80. Particularly, the pressure sensor 93 detects leakage of the refrigerant L by measuring the pressure of the refrigerant L in the circulation flow passage 80.

The first branch outward passage 83 branches into a plurality of second branch outward passages 84 at a second branching portion 83c. The second branch outward passages 84 are connected to inlet portions 89a of different shelf plates 121. That is, the outward passage 80a branches into a plurality of flow passages at the first branching portion 82a and the second branching portion 83c and is connected to a plurality of inner passages 89.

The return passage 80b includes a main return passage 85 and a plurality of branch return passages 86. The radiator 90 is provided at one end of the main return passage 85. A plurality of merging portions 85a are provided at the other end of the main return passage 85. The liquid leakage sensor 96 and the valve 97B are provided in the main return passage 85. The liquid leakage sensor 96 detects leakage of the refrigerant L in the circulation flow passage 80.

The branch return passages 86 connect the outlet portions 89b of the shelf plates 121 and the first merging portions 85a. That is, the return passage 80b merges the refrigerant L flowing through the plurality of inner passages 89 at the first merging portions 85a via the branch return passages 86.

According to this embodiment, by employing the cooling system 103 in which the refrigerant passes through the shelf plates 121 in contact with the battery packs 31, it is possible to efficiently cool the battery packs 31. The outward passage 80a and the return passage 80b of the circulation flow passage 80 branch and are connected to a plurality of shelf plates 121. Accordingly, the cooled refrigerant L passing through the radiator 90 can pass through the insides of the plurality of shelf plates 121 and thus more effective cooling is possible.

According to this embodiment, the pressure sensor 93 and the liquid leakage sensor 96 are provided in the circulation flow passage 80. The pressure sensor 93 can also be used to monitor leakage of a liquid in the circulation flow passage 80. That is, a plurality of sensors for monitoring leakage of a liquid are provided in the circulation flow passage 80 and a liquid leakage monitoring system with high redundancy can be constructed by backing up each other.

The pressure sensor 93 according to this embodiment is provided in a plurality of branch flow passages and the liquid leakage sensor 96 is provided in the merged flow passage. Accordingly, the pressure sensors 93 in the circulation flow passage 80 monitor leakage of a liquid in the branched flow passages and the liquid leakage sensor 96 monitors leakage of a liquid in the cooling system 103 as a whole. Since the sensors for monitoring leakage of a liquid (the pressure sensors 93 and the liquid leakage sensor 96) monitor leakage of a liquid in different ranges, it is possible to enhance accuracy for monitoring leakage of a liquid and to easily specify a position at which a liquid leaks.

According to this embodiment, the pump 92 is provided in a plurality of first branch outward passages 83. Accordingly, the pumps 92 can efficiently cause the refrigerant L to flow in the first branch outward passages 83. The pumps 92 has only to be provided in the branch flow passages (the first branch outward passages 83, the second branch outward passages 84, and the branch return passages 86) between the first branching portion 82a and the first merging portion 85a.

As indicated by an alternating long and two short dashed line in FIG. 15, the plurality of first branch outward passages 83 may be connected to each other downstream from the pumps 92 by a common flow passage 98. The common flow passage 98 serves as a bypass for causing the refrigerant L to flow therethrough when pumping capability of one of the plurality of pumps 92 decreases markedly. Since the cooling system 103 includes the common flow passage 98, constant cooling capability can be maintained even when trouble occurs in one of the plurality of pumps 92. The common flow passage 98 has only to be disposed downstream from the pumps 92 in the first branch outward passages 83 and upstream from the inner passages 89. Accordingly, the common flow passage 98 may be disposed to connect the plurality of second branch outward passages 84 to each other.

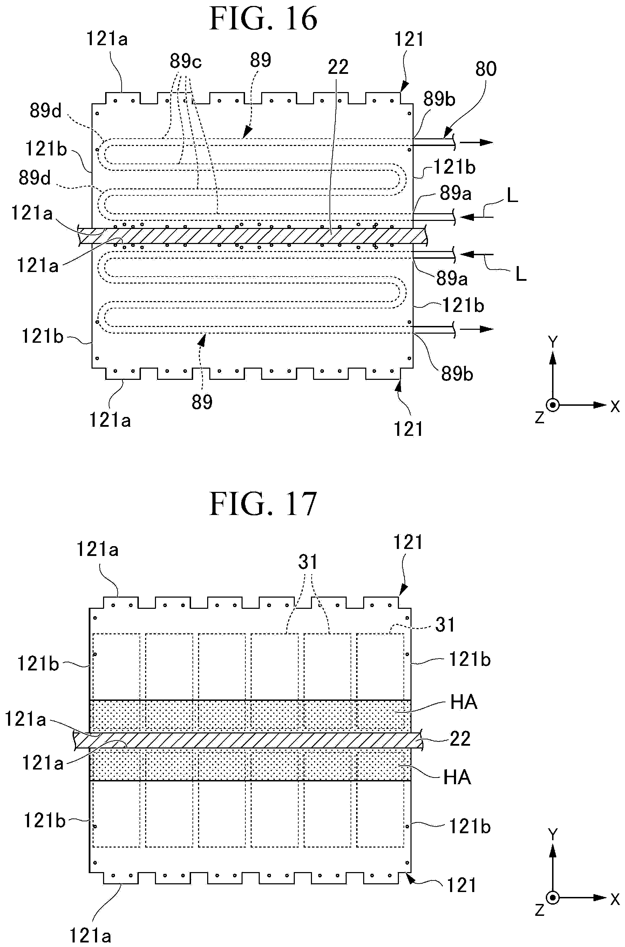

FIG. 16 is a plan view of a pair of shelf plates 121 in which an inner passage 89 is formed.

Similarly to the first embodiment, each shelf plate 121 includes a long-side edge (an end of a long side) 121a constituting long sides of a rectangular shape in a plan view and a short-side edge 121b. A pair of shelf plates 121 are arranged such that the long-side edges 121a face each other with the central partition wall 22 interposed therebetween.

An inlet portion 89a and an outlet portion 89b are provided at both ends of each shelf plate 121. The inlet portion 89a and the outlet portion 89b are located on one of a pair of short-side edges 121b of the shelf plate 121. The inlet portion 89a and the outlet portion 89b are placed on the short-side edge 121b facing the same side in a pair of shelf plates 121.

The inner passage 89 includes a plurality of straight portions 89c and a plurality of curved portions 89d. The straight portions 89c extend in the length direction of the shelf plate 121. The straight portions 89c connect the plurality of straight portions. That is, the inner passage 89 reciprocates in the length direction of the shelf plate 121 a plurality of times. The inlet portion 89a is placed in the straight portion 89c closest to the facing shelf plate 121 out of the plurality of straight portions 89c.

FIG. 17 is a plan view of a pair of shelf plates 121 on which a plurality of battery packs 31 are mounted. The battery packs 31 are arranged in the length direction of the shelf plate 121. The battery packs 31 mounted on one shelf plate 121 out of the pair of shelf plates 121 are likely to have the highest temperature in an area HA close to the other shelf plate 121. Since a state in which the operating temperature of the battery packs 31 is higher in the area HA in which the temperature is likely to increase than that in other areas is maintained, a deterioration rate of unit cells therein is likely to increase.

Regarding the inner passage 89 according to this embodiment, the straight portion 89c in which the inlet portion 89a is located is disposed in the area HA. Accordingly, the inner passage 89 can cause the refrigerant of the lowest temperature flowing from the inlet portion 89a to flow into the area HA in which the temperature of the shelf plate 121 is likely to increase. Accordingly, it is possible to curb an increase in deterioration rate of a specific area of the battery packs 31. As a result, it is possible to make the deterioration rates of the battery packs 31 be equal to each other and to achieve extension of a lifespan of the battery packs 31 in regard of the whole system.

According to this embodiment, the inner passage 89 through which the refrigerant L flows is provided in the shelf plates 121 and the battery packs 31 are cooled by the shelf plates 121. Accordingly, the temperature of a specific battery pack 31 is not likely to be high and safety of the storage battery device 101 is improved.

According to this embodiment, since the inlet portion 89a and the outlet portion 89b of the inner passage 89 are placed on one edge (one end) of each shelf plate 121, the piping structure of the circulation flow passage 80 is simplified. According to this embodiment, a plurality of battery packs 31 are mounted on each shelf plate 121. Accordingly, in comparison with a case in which one inner passage 89 is formed for one battery pack 31, the total number of inner passages 89 decrease and the piping structure of the circulation flow passage 80 is simplified.

### (Modified Example 1 of second embodiment)

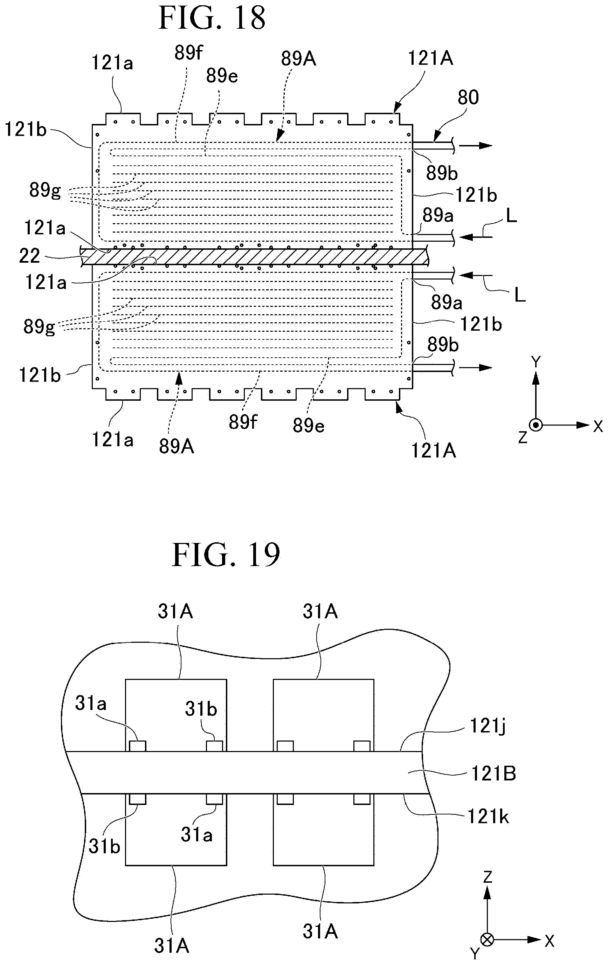

FIG. 18 is a plan view of shelf plates 121A according to Modified Example 1 of this embodiment. An inner passage 89A is formed in each shelf plate 121A. The inner passage 89A includes a main flow passage portion 89e and an inner return passage 89f. The main flow passage portion 89e extends in the length direction of the shelf plate 121A. The main flow passage portion 89e is formed in a flat shape which is wide in the width direction of the shelf plate 121A. A plurality of rectification plates 89g are provided in the main flow passage portion 89e. The plurality of rectification plates 89g extend in the extending direction of the main flow passage portion 89e and are arranged in the width direction of the main flow passage portion 89e. The rectification plate 89g is, for example, a corrugated fin. One end of the main flow passage portion 89e is connected to the inlet portion 89a. The other end of the main flow passage portion 89e is connected to the inner return passage 89f at around the short-side edge 121b opposite to the short-side edge 121b on which the inlet portion 89a is provided. The inner return passage 89f extends from the other end of the main flow passage portion 89e to the short-side edge 121b on which the inlet portion 89a is provided.

With the shelf plate 121A according to this modified example, the main flow passage portion 89e of the inner passage 89A is formed in a flat shape and the rectification plates 89g are provided therein. Since the refrigerant L extends in the width direction of the main flow passage portion 89e and flows into the main flow passage portion 89e, the temperature of the refrigerant L is almost uniform in the width direction of the main flow passage portion 89e. The refrigerant L cools the shelf plate 121A uniformly in the width direction of the shelf plate 121A and can make the temperature of the shelf plate 121A uniform. Since the rectification plates 89g uniformly transmit heat of the whole shelf plate 121A to the refrigerant L, the effect of making the temperature of the shelf plate 121A uniform is enhanced.

With the shelf plate 121A according to this modified example, the refrigerant L flowing in the inner passage 89A does not change easily in the flowing direction. Accordingly, it is possible to reduce a pressure loss of the inner passage 89A and to reduce the capacity of the pump pumping the refrigerant L to the circulation flow passage 80. The rectification plates 89g contribute to reduce of a pressure loss by smoothing the flow of the refrigerant in the main flow passage portion 89e.

### (Modified Example 2 of second embodiment)

FIG. 19 is a front view of a shelf plate (a cooling plate) 121B and battery packs 31A according to Modified Example 2 of this embodiment. A battery pack 31A according to this modified example has the same structure as the battery pack 31 according to the above-mentioned embodiment but is different therefrom in a method of providing the battery pack 31A in the shelf plate 121B.

In FIG. 19, wire portions connected to a positive electrode terminal 31a and a negative electrode terminal 31b of the battery pack 31A are not illustrated.

As illustrated in FIG. 19, the shelf plate 121B includes a first principal surface 121j and a second principal surface 121k. The first principal surface 121j and the second principal surface 121k face the opposite sides. Different battery packs 31A are in contact with the first principal surface 121j and the second principal surface 121k.

Since a refrigerant flows in the shelf plate 121B, dew condensation easily occurs in an exposed portion thereof. According to this modified example, by bringing different battery packs 31A into contact with both principal surfaces of the shelf plate 121B, it is possible to reduce an exposed area of the shelf plate 121B and thus to curb occurrence of dew condensation.

### (Modified Example 3 of second embodiment)

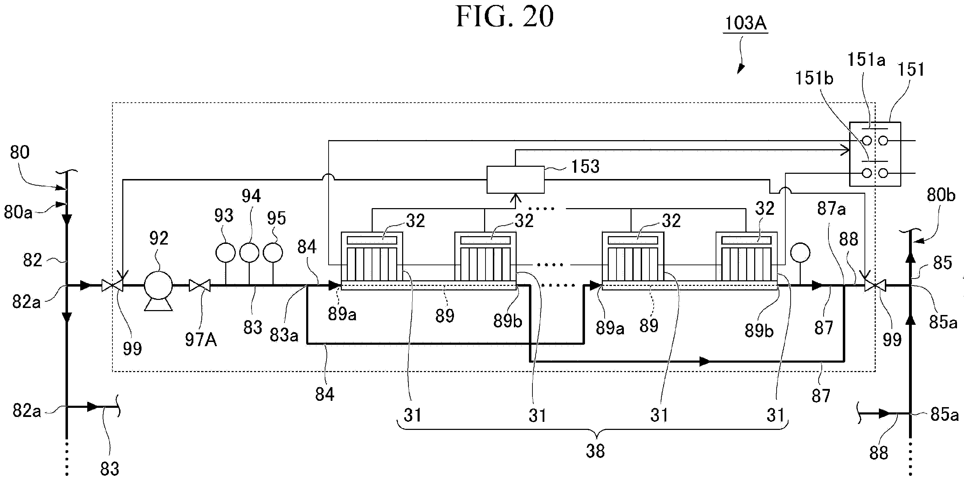

FIG. 20 is a schematic diagram illustrating a cooling system 103A of a battery pack group 38 according to Modified Example 3. The battery pack group 38 according to this modified example includes a plurality of battery packs 31 similarly to the above-mentioned embodiment. A plurality of battery pack groups 38 illustrated in FIG. 20 are provided in a storage battery device 101. A plurality of battery packs 31 of the battery pack group 38 are mounted on a plurality of shelf plates 121.

Similarly to the above-mentioned embodiment, a circulation flow passage 80A of the cooling system 103A includes an outward passage 80a, a return passage 80b, and an inner passage 89 that is provided in the shelf plates 121. The outward passage 80a includes a main outward passage 82 in which a plurality of first branching portions 82a are provided, a plurality of first branch outward passages 83, and a plurality of second branch outward passages 84. The return passage 80b includes a main return passage 85 in which a plurality of first merging portions 85a are provided, a plurality of first branch return passages 88, and a plurality of second branch return passages 87.

Between one first branching portion 82a and one first merging portion 85a, the first branch outward passages 83, the second branch outward passages 84, the inner passage 89, the second branch return passages 87, and the first branch return passages 88 are provided sequentially from upstream. The second branching portion 83c is located at a downstream end of the first branch outward passage 83. A plurality of second branch outward passages 84 are connected to the second branching portion 83c. The plurality of second branch outward passages 84 are connected to the inlet portions 89a of other shelf plates 121. The second branch return passages 87 are connected to the outlet portions 89b of a plurality of shelf plates 121. The plurality of second branch return passages 87 are merged at the second merging portion 87a which is located at a downstream end. The second merging portion 87a and the first merging portion 85a are connected by the first branch return passages 88.

Valves 99 are provided in the first branch outward passages 83 and the first branch return passages 88. That is, the circulation flow passage 80 cools one battery pack group 38 using a section which is interposed between a pair of valves 99. The valve 99 is, for example, an electromagnetic valve. The valve 99 is connected to a determination unit 153 which will be described later.

The battery packs 31 of one battery pack group 38 are connected to each other. Both electrodes (a positive electrode and a negative electrode) of the battery pack group 38 are connected to contacts 151a and 151b of a circuit breaker 151 via wires 152a. The contacts 151a and 151b of the circuit breaker 151 are (normally closed type of) movable contacts which are normally closed.

In the example illustrated in FIG. 20, the battery packs 31 are connected in series but may be connected in parallel. The battery packs 31 may be connected in combination of series connection and parallel connection.

A cell monitoring unit 32 is provided in each battery pack 31. The cell monitoring unit 32 monitors a state of each unit cell 35 in the battery pack 31. The cell monitoring units 32 are connected to the determination unit 153. The determination unit 153 is connected to the circuit breaker 151. The determination unit 153 is provided in each battery pack group 38. When an abnormality of one of a plurality of battery packs 31 belonging to the corresponding battery pack group 38 has been detected, the determination unit 153 opens the contacts 151a and 151b of the circuit breaker 151. When the contacts 151a and 151b are opened, the battery pack group 38 is electrically cut off from the outside. The determination unit 153 is provided in each battery pack group 38. When an abnormality of one of a plurality of battery packs 31 belonging to the corresponding battery pack group 38 has been detected, the determination unit 153 closes a pair of valves 99. Accordingly, a section which is interposed between the pair of valves 99 in the circulation flow passage 80 and which cools the battery pack group 38 including the battery pack 31 of which an abnormality has been detected is separated from the circulation flow passage 80.

According to this modified example, since a circuit breaker 151 is provided for each battery pack group 38, the battery pack groups 38 other than the battery pack group 38 which has been cut off from the outside can be continuously used.

According to this modified example, a cooling section of the battery pack group 38 including the battery pack 31 of which an abnormality has been detected can be separated from the circulation flow passage 80. Accordingly, when the battery pack 31 of which an abnormality has been detected reaches a high temperature, an influence on other battery pack groups 38 via the refrigerant can be suppressed.

According to this modified example, a cooling system and an electrical system are provided for each battery pack group 38. Accordingly, it is possible to facilitate replacement and maintenance for each battery pack group 38.

### (Modified Example 4 of second embodiment)

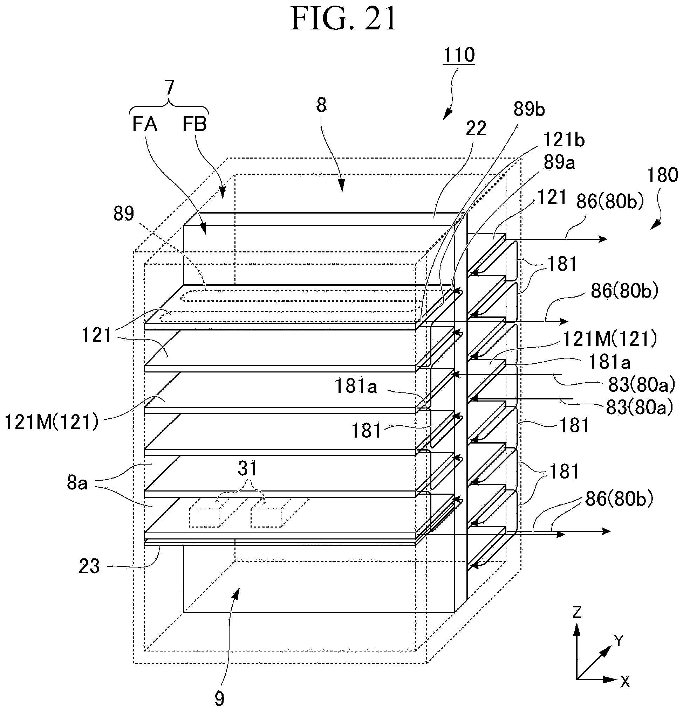

FIG. 21 is a schematic diagram illustrating the configuration of a circulation flow passage 180 according to Modified Example 4. The same elements as in the above-mentioned embodiments and the above-mentioned modified examples will be referred to by the same reference signs and description thereof will not be repeated.

In this modified example, a housing 110 including a storage battery chamber 8 and a management chamber 9 therein includes a plurality of shelf plates 121 and a central partition wall 22. The central partition wall 22 partitions the inside of the housing 110 into a front compartment FA and a rear compartment FB. The central partition wall 22 and the plurality of shelf plates 121 partition the storage battery chamber 8 into a plurality of sub-chambers 8a to be air-tight. A plurality of battery packs 31 are arranged in each sub-chamber 8a.

The plurality of shelf plates 121 are arranged in the front-rear direction with the central partition wall 22 interposed therebetween with two shelf plates as one set. The plurality of shelf plates 121 are arranged in a vertical direction (a predetermined arrangement direction) such that the principal surfaces face each other in the front compartment FA and the rear compartment FB.

An inner passage 89 is provided in each shelf plate 121. An inlet portion 89a and an outlet portion 89b of the inner passage 89 are located on a short-side edge 121b. The short-side edges 121b on which the inlet portion 89a and the outlet portion 89b are located face the same side in the plurality of shelf plates 121. Accordingly, it is possible to simplify a piping path connected to the inlet portions 89a and the outlet portions 89b. On the short-side edge 121b, the inlet portion 89a is located close to the central partition wall 22 and the outlet portion 89b is located distant from the central partition wall 22.

Similarly to the second embodiment, the circulation flow passage 180 includes an outward passage 80a and a return passage 80b.

The outward passage 80a includes a main outward passage 82 (see FIG. 15) and two first branch outward passages 83 which branch from the main outward passage 82. The two first branch outward passages 83 are connected to the inlet portion 89a of the shelf plate 121 which is located in the middle of the plurality of shelf plates 121 which are arranged in the vertical direction in the front compartment FA and the rear compartment FB. Here, the shelf plate 121 connected to the first branch outward passages 83 is referred to as a middle shelf plate (a middle partition wall) 121M. The middle shelf plate 121M is a shelf plate 121 which is located in the middle in the vertical direction and is other than the top shelf plate 121 and the bottom shelf plate 121. The middle shelf plate 121M is a shelf plate 121 which is the third from the top and the fourth from the bottom out of six shelf plates 121 which are arranged in the vertical direction in the front compartment FA. The middle shelf plate 121M is a shelf plate 121 which is the fourth from the top and the fifth from the bottom out of eight shelf plates 121 which are arranged in the vertical direction in the rear compartment FB.

The return passage 80b includes a main return passage 85 (see FIG. 15) and four branch return passages 86 which merge to the main return passage 85. The four branch return passages 86 are connected to the outlet portions 89b of the shelf plates 121 which are located at the top and the bottom out of the plurality of shelf plates 121 which are arranged in the vertical direction in the front compartment FA and the rear compartment FB.

In an area above the middle shelf plate 121M, the outlet portion 89b of the shelf plate 121 which is located below and the inlet portion 89a of the shelf plate 121 which is located above are connected to each other via a connection flow passage 181. In an area below the middle shelf plate 121M, the outlet portion 89b of the shelf plate 121 which is located above and the inlet portion 89a of the shelf plate 121 which is located below are connected to each other via a connection flow passage 181. The connection flow passage 181 connected to the outlet portion 89b of the middle shelf plate 121M branches into above and below at a branching portion 181a. Accordingly, a refrigerant derived from the middle shelf plate 121M branches and is guided to the shelf plates 121 above and below.

The refrigerant flowing in the connection flow passage 181 passes sequentially through the inner passages 89 of the shelf plates 121 which are arranged to both ends (the top and the bottom end) in the vertical direction from the inner passage 89 of the middle shelf plate 121M. A sub-chamber 8a in the vicinity of the center in the vertical direction out of a plurality of sub-chambers 8a which are partitioned by a plurality of shelf plates 121 and which are arranged in the vertical direction is likely to have heat concentrated therein. A state in which the operating temperature of the battery packs 31 disposed in the sub-chamber 8a in the vicinity of the center is higher than those of the battery packs 31 disposed in other sub-chambers 8a is maintained, and the deterioration rate of the unit cells therein is likely to increase.

According to this modified example, since a refrigerant flows sequentially from the partition wall in the vicinity of the center in the vertical direction to the partition walls at the ends in the vertical direction, the refrigerant having a relatively low temperature cools the battery packs 31 disposed in the sub-chamber 8a in the vicinity of the center in the vertical direction in which heat is likely to be concentrated. Accordingly, it is possible to curb an increase in the deterioration rate of the battery packs 31 disposed in the sub-chamber 8a in the vicinity of the center in the vertical direction. As a result, it is possible to make the deterioration rates of the battery packs 31 equal to each other and achieve extension in a lifespan of the battery packs 31 in the whole system.

### (Third embodiment)

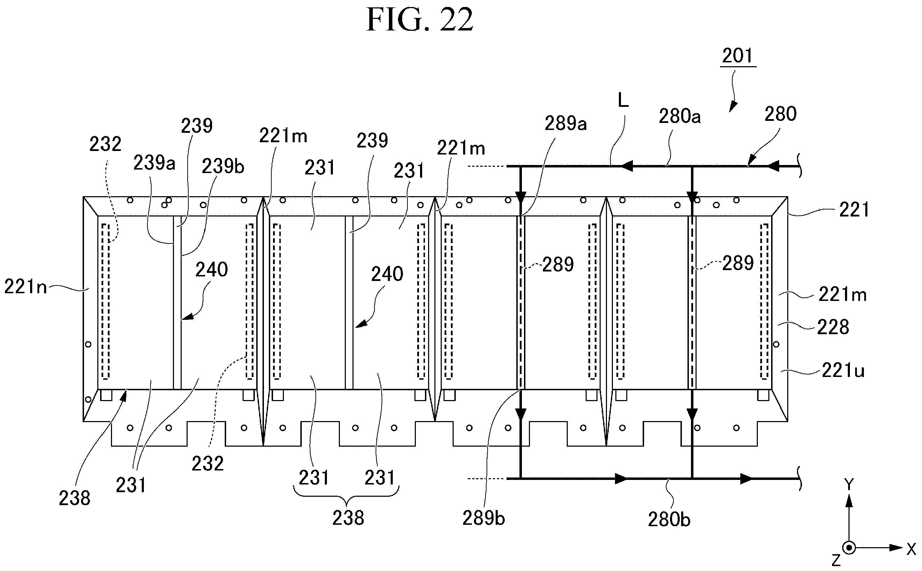

FIG. 22 is a plan view of shelf plates 221, battery packs 231, and cooling plates 239 in a storage battery device 201 according to a third embodiment.

The schematic structure of the storage battery device 201 according to this embodiment is different from those of the storage battery devices 1 and 101 according to the first and second embodiments in a cooling system. The same elements as in the above-mentioned embodiments will be referred to by the same reference signs and description thereof will not be repeated.

A plurality of battery packs 231 are arranged in the length direction in each shelf plate 221. The plurality of battery packs 231 constitutes a battery pack set 238 with a pair thereof as one set. A cooling plate 239 is interposed between a pair of battery packs 231 in one battery pack set 238. The cooling plate 239 are in contact with different principal surfaces (a first principal surface 239a and a second principal surface 239b) of a pair of battery packs 231 of the battery pack set 238.

The cooling plate 239 is mounted on the shelf plate 221 in an attitude which is perpendicular to the shelf plate 221. That is, the cooling plate 239 is disposed in an attitude in which an in-plane direction thereof is parallel to the vertical direction (the Z-axis direction).

The cooling plate 239 includes the first principal surface 239a and the second principal surface 239b facing the opposite sides. The first principal surface 239a and the second principal surface 239b are covered by different battery packs 231. Accordingly, no exposed portion is formed on the first principal surface 239a and the second principal surface 239b.

An inner passage 289 is provided in the cooling plate 239. The inner passage 289 is part of a circulation flow passage 280 through which a refrigerant L passes. That is, the circulation flow passage 280 passes through the inside of the cooling plate 239. An outward passage 280a of the circulation flow passage 280 is connected to an inlet portion 289a of the inner passage 289. A return passage 280b of the circulation flow passage 280 is connected to an outlet portion 289b of the inner passage 289. Similarly to the second embodiment, a pump that circulates a refrigerant L and a heat radiating portion that radiates heat from the refrigerant L are provided in the circulation flow passage 280.

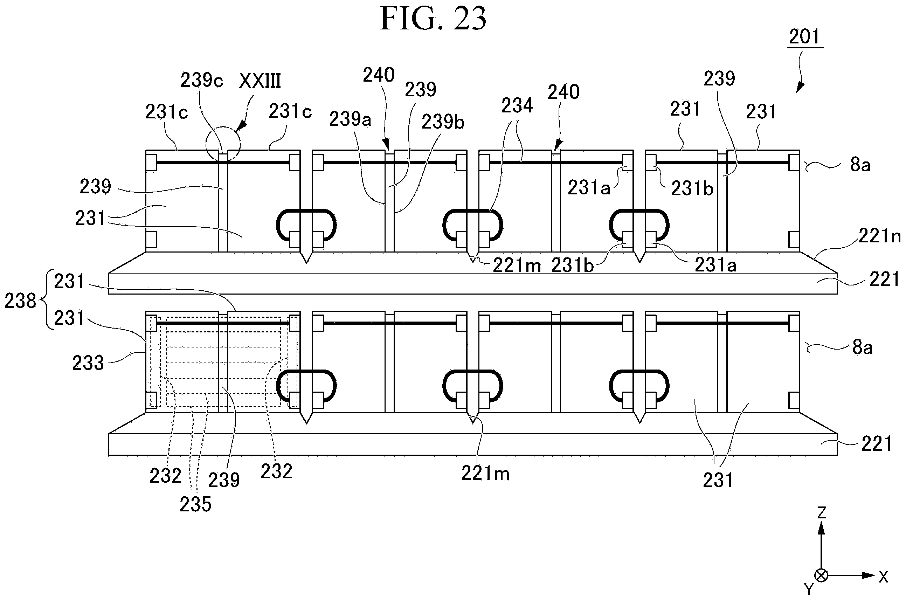

FIG. 23 is a front view of shelf plates 221, battery packs 231, and cooling plates 239. In FIG. 23, the circulation flow passage 280 is not illustrated.

A plurality of battery packs 231 are connected in series by wire portions 234 on the shelf plate 221. Each battery pack 231 includes a plurality of unit cells 235, a cell monitoring unit 232, and a case 233 that air-tightly accommodates the unit cells 235 and the cell monitoring unit 232. The case 233 seals the inside thereof and thus it is possible to reduce dew condensation which occurs therein.

Inside each battery pack 231, the unit cells 235 are located on the cooling plate 239 side and the cell monitoring unit 232 is located on the side opposite to the cooling plate 239.

The cell monitoring unit 232 is disposed inside the case 233 in an attitude in which an in-plane direction thereof is parallel to the vertical direction in the battery pack 231. Since the unit cells 235 are disposed on the cooling plate 239 side, it is possible to more effectively cool the unit cells. Since the cell monitoring unit 232 is disposed in an attitude in which an in-plane direction thereof is parallel to the vertical direction, it is possible to smoothly discharge dew condensation water generated on the surface thereof downward.

Part of a top surface (a surface facing the top side) 221u of the shelf plate 221 is covered by the battery packs 231 by mounting a plurality of battery packs 231 thereon. Part (an exposed part 228) of the top surface 221a which is not covered by the battery packs 231 is exposed.

A V-shaped recessed portion 221m is provided in the exposed part 228 of the top surface 221a of the shelf plate 221 between the battery pack sets 238. The shelf plate 221 is in contact with the cooling plate 239 and is easily cooled. Accordingly, dew condensation is likely to occur in the exposed part 228 of the shelf plate 221. The recessed portion 221m can collectively keep dew condensation water generated on the top surface 221a of the shelf plate 221 and troubles due to dropping of dew condensation can be curbed.

An inclined portion 221n that is inclined downward toward an end of the shelf plate 221 is provided in the exposed part 228 outside the area in which the battery pack set 238 is mounted in a plan view on the top surface 221a of the shelf plate 221. The inclined portion 221n can cause dew condensation water generated on the surface to drop downward from the end of the shelf plate 221. Accordingly, an influence of dew condensation water generated on the exposed part 228 on the operation of the battery packs 231 can be curbed.

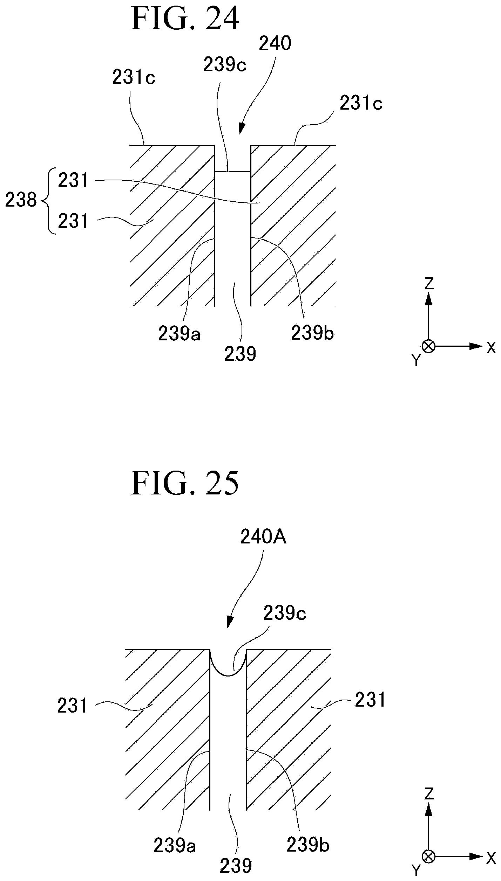

FIG. 24 is an enlarged view of an area XXIII in FIG. 23.

A lateral end 239c facing the top of the cooling plate 239 is located inside a side surface 231c facing the top of the battery packs 231. That is, the lateral end 239c is located below the side surface 231c. Accordingly, a groove 240 is formed on the surface facing the top which is formed by a pair of battery packs 231 and the cooling plate 239. As a result, the groove 240 can keep dew condensation water generated in the lateral end 239c which is an exposed art of the cooling plate 239 and curb troubles due to dropping of dew condensation water.

According to this embodiment, by brining different battery packs 231 into contact with both principal surfaces 239a and 239b of the cooling plate 239 which is cooled by the refrigerant L, it is possible to efficiently cool the battery packs 231 using the cooling plate 239. Accordingly, the temperature of the battery packs 231 is not likely to increase and safety of the storage battery device 201 is enhanced.

According to this embodiment, both principal surfaces 239a and 239b of a cooling plate 239 are covered by the battery packs 231. Dew condensation is likely to occur in an exposed part of the cooling plate 239. Since both principal surfaces 239a and 239b of the cooling plate 239 are covered by the battery packs 231, an exposed area is reduced and occurrence of dew condensation is suppressed. That is, according to this embodiment, it is possible to curb an influence of dew condensation on safety.

According to this embodiment, the cooling plate 239 is disposed in an attitude in which an in-plane direction thereof is parallel to the vertical direction. Accordingly, the cooling plate 239 can smoothly discharge dew condensation water generated on the surface downward. That is, according to this embodiment, it is possible to curb an influence of dew condensation on safety.

### (Modified example of third embodiment)

FIG. 25 is a diagram illustrating a recessed groove 240A according to a modified example. FIG. 25 is a diagram corresponding to FIG. 24 which has been described above. A U-shaped recessed groove 240A is provided on a lateral end 239c of a cooling plate 239. The lateral end 239c is an exposed part and thus dew condensation is likely to occur therein. By providing the recessed groove 240A in the lateral end 239c, it is possible to keep dew condensation water and to curb troubles due to dropping of dew condensation water.

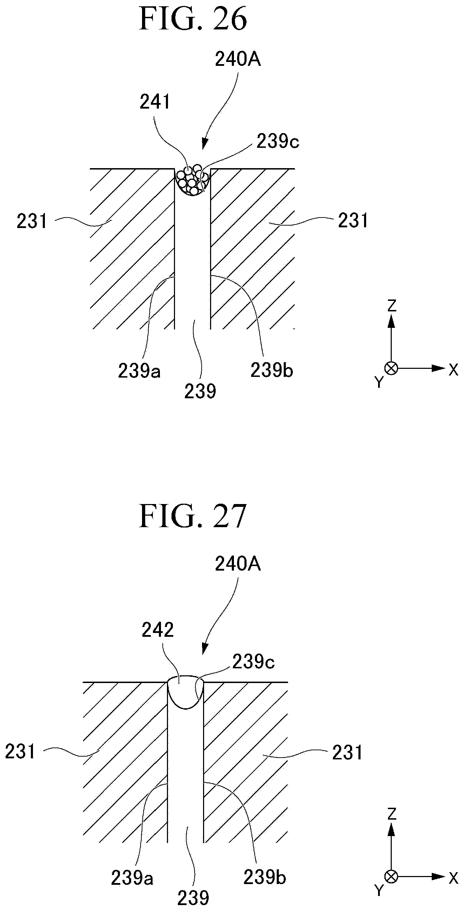

As illustrated in FIG. 26, the recessed groove 240A which is an exposed part of the cooling plate 239 may be filled with a moisture absorbing material 241. The moisture absorbing material 241 can keep dew condensation water generated in the recessed groove 240A and prevent dropping of dew condensation water.

As illustrated in FIG. 27, the recessed groove 240A which is an exposed part of the cooling plate 239 may be filled with a heat insulating material 242. The heat insulating material 242 suppresses occurrence of dew condensation in the exposed lateral end 239c of the cooling plate 239.

In the above-mentioned embodiments, shelf plates which are arranged in the vertical direction are used as the second partition walls, but the installation attitude of the second partition walls is not limited thereto.

According to any one of the above-mentioned embodiments, it is possible to provide a storage battery device of which safety is improved by achieving suppression of an increase in the internal pressure of the storage battery device, suppression of an increase in the internal temperature, redundancy of a system, and suppression of occurrence of dew condensation.

While some embodiments of the invention have been described above, these embodiments are presented as examples and do not intend to limit the scope of the invention. These embodiments can be embodied in various other forms and can be subjected to various omissions, replacements, and modifications without departing from the gist of the invention. These embodiments and modifications thereof are included in the scope or gist of the invention and are also included in a range equivalent to the invention described in the appended claims.

### DESCRIPTION OF REFERENCE NUMERALS

- 1, 101, 201...: Storage battery device
- 2...: Vehicle
- 2e, 5, 6...: Ventilation hole
- 5a, 6a...: Water receiving portion
- 8a...: Sub-chamber
- 10, 110...: Housing
- 12a...: Opening
- 12b...: Guard member (Movement limiting portion)
- 13b...: Hole
- 14...: First front cover (cover)
- 14b, 21, 121, 121A, 121B, 221...: Shelf plate (partition wall)
- 21e, 221m...: Recessed portion
- 22...: Central partition wall (partition wall)
- 23...: Arc barrier wall
- 24...: Bolt
- 18...: Lid member (covering means)
- 19...: Replaceable container
- 21f...: Through-hole
- 24...: Bolt
- 24a...: Head
- 30...: Storage battery unit
- 31, 31A, 231...: Battery pack
- 32a...: First temperature sensor
- 34, 234...: Wire portion
- 35, 235...: Unit cell
- 36...: Wire clamping portion
- 37...: Second temperature sensor
- 50...: Storage battery managing unit
- 51, 151...: Circuit breaker,
- 60...: Main circuit unit (vehicular main circuit unit)
- 60b...: Fan (cooling fan)
- 61...: Main circuit managing unit
- 62...: Power unit (power conversion device)
- 64...: Third temperature sensor
- 89, 89A, 289...: Inner passage
- 89a, 289a...: Inlet
- 89b, 289b...: Outlet
- 89c...: Straight portion
- 89d...: Curved portion
- 221n...: Exposed portion
- 221u...: Top surface (surface facing the top side)
- 228...: Exposed part
- 239...: Cooling plate
- 240, 240A...: Groove
- DR...: Driving room
- L...: Refrigerant
- T1...: First temperature
- T2...: Second temperature
- T3...: Third temperature

## Claims

1. A storage battery device comprising:
a housing that is provided with an opening which is covered by a predetermined covering means; and
a storage battery unit that is accommodated in the housing,
wherein the covering means is opened with an increase of an internal pressure of the housing.

2. The storage battery device according to claim 1, wherein the covering means is opened by moving outward from the housing, and
wherein the housing includes a movement limiting portion that limits the outward movement of the opened covering means.

3. The storage battery device according to claim 1 or 2, wherein the storage battery unit includes:
a first temperature sensor that monitors a temperature of the storage battery unit and a second temperature sensor that is disposed in a space in which the storage battery unit is accommodated;
a circuit breaker that electrically isolates input and output terminals of the storage battery unit when the temperature detected by the first temperature sensor is higher than a first temperature; and
a storage battery managing unit that transmits a signal for issuing a warning when the temperature detected by the second temperature sensor is higher than a second temperature which is higher than the first temperature.

4. The storage battery device according to any one of claims 1 to 3, wherein the storage battery unit includes a plurality of battery packs, each of which includes a plurality of unit cells, and
wherein the housing includes a partition wall that comes in contact with the battery packs and a cover that partitions an inside and an outside of the housing and is fastened to the partition wall in a state in which the cover is in surface contact with the partition wall.

5. The storage battery device according to claim 4, wherein the partition wall and the cover are fastened by a bolt which is inserted from an outer surface side of the cover and a recessed portion in which a head of the bolt is located is provided in the outer surface of the cover.

6. The storage battery device according to claim 4 or 5, wherein the partition wall partitions the inside of the housing into a plurality of sub-chambers in which the battery packs are accommodated.

7. The storage battery device according to claim 6, wherein the storage battery unit includes wire portions that electrically connect the plurality of battery packs to each other, and
wherein the partition wall is provided with through-holes into which each wire portion is inserted, and a wire clamping portion covering a gap between the wire portion and an inner circumferential surface of the through-hole is attached to each through-hole.

8. The storage battery device according to any one of claims 4 to 7, wherein the partition wall includes a first end face that faces the cover and a pair of second end faces that are perpendicular to the first end face and has an inner passage through which a refrigerant passes provided therein, and
wherein an inlet and an outlet of the inner passage is located on one of the pair of second end faces.

9. The storage battery device according to claim 8, wherein a pair of partition walls are arranged such that third end faces thereof, which faces the side opposite to the first end face, face each other,
wherein the inner passage includes a plurality of straight portions that extend along the third end face and a plurality of curved portions that connect the plurality of straight portions and reciprocates along the third end face a plurality of times, and
wherein the inlet is located in the straight portion which is closest to the facing partition wall out of the plurality of straight portions.

10. The storage battery device according to claim 8 or 9, wherein the plurality of partition walls are arranged in a predetermined arrangement direction such that principal surfaces thereof face each other, and
wherein the refrigerant sequentially passes through the inner passage of the partition wall located in the middle of the arrangement direction and the inner passages of the partition walls arranged to approach both ends in the arrangement direction.

11. The storage battery device according to any one of claims 7 to 10, further comprising a cooling plate that is inserted between neighboring battery packs and that has an inner passage through which a refrigerant passes provided therein.

12. The storage battery device according to claim 11, wherein a recessed groove is provided in an exposed portion of the cooling plate.

13. The storage battery device according to claim 11 or 12, wherein the exposed portion of the cooling plate is covered with at least one of a moisture absorbing material and a heat insulating material.

14. The storage battery device according to any one of claims 11 to 13, wherein a lateral end of the cooling plate is located at an inner position of a side surface of the battery pack to form a groove.

15. The storage battery device according to any one of claims 11 to 14, wherein the cooling plate and the battery packs are mounted on a top surface of the partition wall, and
wherein an inclined portion that is inclined downward toward an end of the partition wall is provided in an exposed portion of the top surface of the partition wall.

16. The storage battery device according to any one of claims 11 to 15, wherein the cooling plate and the battery packs are mounted on a top surface of the partition wall, and
wherein a recessed portion is provided in an exposed portion of the top surface of the partition wall.

17. The storage battery device according to any one of claims 1 to 16, further comprising at least one dew condensation suppressing means from among:
a first dew condensation suppressing means in which a ventilation hole that causes the inside and outside of the housing to communicate with each other is provided in the housing and a water receiving portion that receives dew condensation water is provided at a position in the housing corresponding to the ventilation hole;
a second dew condensation suppressing means in which a hole is provided in the housing, a replaceable container that receives a moisture absorbing material is attached to the hole, and an inside of the replaceable container communicates with the inside of the housing and is sealed from the outside of the housing; and
a third dew condensation suppressing means in which at least part of an inner wall surface of the housing is covered with at least one of a moisture absorbing material and a heat insulating material.

18. A vehicle comprising:
the storage battery device according to any one of claims 1 to 17; and
a driving room,
wherein the opening is located on a surface facing a side opposite to the driving room.

19. A vehicle comprising:
the storage battery device according to any one of claims 1 to 17; and
a vehicular main circuit unit that is disposed adjacent to the storage battery device and that includes a power conversion device;
a third temperature sensor that is disposed in a space in which the vehicular main circuit unit is accommodated;
a cooling fan that sends air passing around the storage battery device to the vehicular main circuit unit; and
a main circuit managing unit that transmits a signal for issuing a warning when a temperature detected by the third temperature sensor is higher than a predetermined temperature.
